# EUROPEAN PATENT APPLICATION

(11) **EP 4 776 744 A2**
(43) Date of publication of application: **15.07.2026**
(21) Application number: 25227378.4
(22) Date of filing: 29.12.2025
(51) Int. Cl.: H04W 76/12, H04W 8/24, H04W 76/16, H04W 88/06, H04W 84/12

(54) **RAN-LEVEL CELLULAR-WLAN CONVERGENCE**

(30) Priority: 14.01.2025 FI 20255022
(71) Applicant: Nokia Solutions and Networks Oy, 02610 Espoo (FI)
(72) Inventor: KAK, Ahan, Summit (US); KOTIKANYAKADANAM SHESHADRI, Ramanujan, Jersey City (US); CHOI, Nakjung, Florham Park (US)
(74) Representative: Bryers Intellectual Property Ltd

(57) **Abstract**

Various example embodiments of a cellular - wireless local area network (WLAN) radio access network (RAN) convergence (CWRC) capability are presented. The CWRC capability may be configured to support architectural and procedural solutions for enabling Layer 2 (L2) convergence between cellular and WLAN access within the RAN.

## Description

### TECHNICAL FIELD

Various example embodiments relate generally to communication networks and, more particularly but not exclusively, to supporting radio access network (RAN) level converge of multiple radio access technology (RAT) types.

### BACKGROUND

Various communications technologies may be used to support communications in various types of communications systems.

### SUMMARY

In at least some example embodiments, a terminal device includes at least one processor and at least one memory storing instructions which, when executed by the at least one processor, cause the terminal device at least to perform sending a terminal device capability information message where the terminal device capability information message is indicative that the terminal device is capable of supporting cellular - wireless local area network (WLAN) radio access network (RAN) convergence (CWRC) bearers, receiving a radio resource control (RRC) reconfiguration message where the RRC reconfiguration message includes a set of parameters for a CWRC bearer for the terminal device, and configuring the CWRC bearer for the terminal device based on the set of parameters for the CWRC bearer for the terminal device. In at least some example embodiments, a computer-readable storage medium includes computer program code which, when executed by a terminal device, causes the terminal device to perform sending a terminal device capability information message where the terminal device capability information message is indicative that the terminal device is capable of supporting cellular - wireless local area network (WLAN) radio access network (RAN) convergence (CWRC) bearers, receiving a radio resource control (RRC) reconfiguration message where the RRC reconfiguration message includes a set of parameters for a CWRC bearer for the terminal device, and configuring the CWRC bearer for the terminal device based on the set of parameters for the CWRC bearer for the terminal device. In at least some example embodiments, a method includes sending a terminal device capability information message where the terminal device capability information message is indicative that the terminal device is capable of supporting cellular - wireless local area network (WLAN) radio access network (RAN) convergence (CWRC) bearers, receiving a radio resource control (RRC) reconfiguration message where the RRC reconfiguration message includes a set of parameters for a CWRC bearer for the terminal device, and configuring the CWRC bearer for the terminal device based on the set of parameters for the CWRC bearer for the terminal device. In at least some example embodiments, an apparatus includes means for sending a terminal device capability information message where the terminal device capability information message is indicative that the terminal device is capable of supporting cellular - wireless local area network (WLAN) radio access network (RAN) convergence (CWRC) bearers, means for receiving a radio resource control (RRC) reconfiguration message where the RRC reconfiguration message includes a set of parameters for a CWRC bearer for the terminal device, and means for configuring the CWRC bearer for the terminal device based on the set of parameters for the CWRC bearer for the terminal device. In at least some example embodiments, the terminal device capability information message includes a unique layer 2 identifier specific to the terminal device for use in supporting CWRC-related operations. In at least some example embodiments, the terminal device supports a downlink and an uplink, and the terminal device capability information message includes an information element including at least one of: at least one parameter indicative as to whether the terminal device supports a first CWRC bearer type in at least one of the downlink or the uplink, at least one parameter indicative as to whether the terminal device supports a second CWRC bearer type in at least one of the downlink or the uplink, or at least one parameter indicative as to whether the terminal device supports a third CWRC bearer type in at least one of the downlink or the uplink. In at least some example embodiments, the RRC reconfiguration message includes a first information element, where the first information element includes a data radio bearer type element indicative of a data radio bearer type for the CWRC bearer for the terminal device, a CWRC bearer type element indicative of a bearer type of the CWRC bearer for the terminal device, a service data adaptation protocol (SDAP) configuration element including one or more parameters for an SDAP entity for the CWRC bearer for the terminal device, and a packet data convergence protocol (PDCP) configuration element including one or more parameters for a PDCP entity for the CWRC bearer for the terminal device. In at least some example embodiments, the RRC reconfiguration message includes a second information element, where the second information element includes a unique Layer 2 identifier specific to a WLAN termination element supporting the CWRC bearer for the terminal device. In at least some example embodiments, the CWRC bearer for the terminal device includes one of a bearer including multiple protocol data unit sessions based on multiple respective service data adaptation protocol entities mapped onto access-specific data radio bearers associated with respective packet data convergence protocol entities, a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, or a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access. In at least some example embodiments, the terminal device is configured to support at least one of a first service data adaptation protocol entity mapped to a first data radio bearer associated with a first packet data convergence protocol entity based on cellular access and a second service data adaptation protocol entity mapped to a second data radio bearer associated with a second packet data convergence protocol entity based on WLAN access, a service data adaptation protocol entity mapped to a first data radio bearer associated with a first packet data convergence protocol entity based on cellular access and a second data radio bearer associated with a second packet data convergence protocol entity based on WLAN access, or a service data adaptation protocol entity mapped to a packet data convergence protocol entity supporting a data radio bearer supporting a first logical channel based on cellular access and a second logical channel based on WLAN access.

In at least some example embodiments, an apparatus includes at least one processor and at least one memory storing instructions which, when executed by the at least one processor, cause the apparatus at least to perform sending, by a control element of a radio access network (RAN) toward a wireless local area network (WLAN) termination element of the RAN, a bearer context setup request message for a cellular - WLAN RAN convergence (CWRC) bearer, and receiving, by the control element from the WLAN termination element, a bearer context setup response message for the CWRC bearer. In at least some example embodiments, the bearer context setup request message for the CWRC bearer is sent based on triggering of a bearer context setup procedure by the control element. In at least some example embodiments, the instructions, when executed by the at least one processor, cause the apparatus at least to perform sending, by the control element toward a user plane element of the RAN, a bearer context setup request message. In at least some example embodiments, the instructions, when executed by the at least one processor, cause the apparatus at least to perform sending, by the control element toward a user plane element of the RAN, a bearer context modification request message. In at least some example embodiments, the instructions, when executed by the at least one processor, cause the apparatus at least to perform sending, by the control element toward the WLAN termination element, a bearer context release command for the CWRC bearer, and receiving, by the control element from the WLAN termination element, a bearer context release complete message for the CWRC bearer. In at least some example embodiments, the bearer context release command for the CWRC bearer is sent based on triggering of a bearer context release procedure by the control element. In at least some example embodiments, the instructions, when executed by the at least one processor, cause the apparatus at least to perform sending, by the control element toward a user plane element of the RAN prior to sending of the bearer context release command for the CWRC bearer, a bearer context release command message, and sending, by the control element toward a distributed unit of the RAN prior to sending of the bearer context release command for the CWRC bearer, a terminal device context release command for a terminal device of the CWRC bearer. In at least some example embodiments, the bearer context release command for the CWRC bearer is sent based on triggering of a bearer context release procedure by a user plane element of the RAN. In at least some example embodiments, the bearer context release command for the CWRC bearer is sent based on receipt of a bearer context release complete message from a user plane element of the RAN and based on receipt of a terminal device context release complete message for the terminal device of the CWRC bearer. In at least some example embodiments, the CWRC bearer includes one of a bearer including multiple protocol data unit sessions based on multiple respective service data adaptation protocol entities mapped onto access-specific data radio bearers associated with respective packet data convergence protocol entities, a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, or a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access.

In at least some example embodiments, an apparatus includes at least one processor and at least one memory storing instructions which, when executed by the at least one processor, cause the apparatus at least to perform sending, by a control element of a radio access network (RAN) toward a wireless local area network (WLAN) termination element of the RAN, a bearer context setup request message for a cellular - WLAN RAN convergence (CWRC) bearer, and receiving, by the control element from the WLAN termination element, a bearer context setup response message for the CWRC bearer. In at least some example embodiments, the bearer context setup request message for the CWRC bearer is sent based on triggering of a bearer context setup procedure by the control element. In at least some example embodiments, the instructions, when executed by the at least one processor, cause the apparatus at least to perform sending, by the control element toward a user plane element of the RAN, a bearer context setup request message. In at least some example embodiments, the instructions, when executed by the at least one processor, cause the apparatus at least to perform sending, by the control element toward a user plane element of the RAN, a bearer context modification request message. In at least some example embodiments, the instructions, when executed by the at least one processor, cause the apparatus at least to perform sending, by the control element toward the WLAN termination element, a bearer context release command for the CWRC bearer, and receiving, by the control element from the WLAN termination element, a bearer context release complete message for the CWRC bearer. In at least some example embodiments, the bearer context release command for the CWRC bearer is sent based on triggering of a bearer context release procedure by the control element. In at least some example embodiments, the instructions, when executed by the at least one processor, cause the apparatus at least to perform sending, by the control element toward a user plane element of the RAN prior to sending of the bearer context release command for the CWRC bearer, a bearer context release command message, and sending, by the control element toward a distributed unit of the RAN prior to sending of the bearer context release command for the CWRC bearer, a terminal device context release command for a terminal device of the CWRC bearer. In at least some example embodiments, the bearer context release command for the CWRC bearer is sent based on triggering of a bearer context release procedure by a user plane element of the RAN. In at least some example embodiments, the bearer context release command for the CWRC bearer is sent based on receipt of a bearer context release complete message from a user plane element of the RAN and based on receipt of a terminal device context release complete message for the terminal device of the CWRC bearer. In at least some example embodiments, the CWRC bearer includes one of a bearer including multiple protocol data unit sessions based on multiple respective service data adaptation protocol entities mapped onto access-specific data radio bearers associated with respective packet data convergence protocol entities, a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, or a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access.

In at least some example embodiments, a computer-readable storage medium includes computer program code which, when executed by an apparatus, causes the apparatus at least to perform sending, by a control element of a radio access network (RAN) toward a wireless local area network (WLAN) termination element of the RAN, a bearer context setup request message for a cellular - WLAN RAN convergence (CWRC) bearer, and receiving, by the control element from the WLAN termination element, a bearer context setup response message for the CWRC bearer. In at least some example embodiments, the bearer context setup request message for the CWRC bearer is sent based on triggering of a bearer context setup procedure by the control element. In at least some example embodiments, the computer program code, when executed by the apparatus, causes the apparatus at least to perform sending, by the control element toward a user plane element of the RAN, a bearer context setup request message. In at least some example embodiments, the computer program code, when executed by the apparatus, causes the apparatus at least to perform sending, by the control element toward a user plane element of the RAN, a bearer context modification request message. In at least some example embodiments, the computer program code, when executed by the apparatus, causes the apparatus at least to perform sending, by the control element toward the WLAN termination element, a bearer context release command for the CWRC bearer, and receiving, by the control element from the WLAN termination element, a bearer context release complete message for the CWRC bearer. In at least some example embodiments, the bearer context release command for the CWRC bearer is sent based on triggering of a bearer context release procedure by the control element. In at least some example embodiments, the computer program code, when executed by the apparatus, causes the apparatus at least to perform sending, by the control element toward a user plane element of the RAN prior to sending of the bearer context release command for the CWRC bearer, a bearer context release command message, and sending, by the control element toward a distributed unit of the RAN prior to sending of the bearer context release command for the CWRC bearer, a terminal device context release command for a terminal device of the CWRC bearer. In at least some example embodiments, the bearer context release command for the CWRC bearer is sent based on triggering of a bearer context release procedure by a user plane element of the RAN. In at least some example embodiments, the bearer context release command for the CWRC bearer is sent based on receipt of a bearer context release complete message from a user plane element of the RAN and based on receipt of a terminal device context release complete message for the terminal device of the CWRC bearer. In at least some example embodiments, the CWRC bearer includes one of a bearer including multiple protocol data unit sessions based on multiple respective service data adaptation protocol entities mapped onto access-specific data radio bearers associated with respective packet data convergence protocol entities, a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, or a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access.

In at least some example embodiments, a method includes sending, by a control element of a radio access network (RAN) toward a wireless local area network (WLAN) termination element of the RAN, a bearer context setup request message for a cellular - WLAN RAN convergence (CWRC) bearer, and receiving, by the control element from the WLAN termination element, a bearer context setup response message for the CWRC bearer. In at least some example embodiments, the bearer context setup request message for the CWRC bearer is sent based on triggering of a bearer context setup procedure by the control element. In at least some example embodiments, the method further includes sending, by the control element toward a user plane element of the RAN, a bearer context setup request message. In at least some example embodiments, the method further includes sending, by the control element toward a user plane element of the RAN, a bearer context modification request message. In at least some example embodiments, the method further includes sending, by the control element toward the WLAN termination element, a bearer context release command for the CWRC bearer, and receiving, by the control element from the WLAN termination element, a bearer context release complete message for the CWRC bearer. In at least some example embodiments, the bearer context release command for the CWRC bearer is sent based on triggering of a bearer context release procedure by the control element. In at least some example embodiments, the method further includes sending, by the control element toward a user plane element of the RAN prior to sending of the bearer context release command for the CWRC bearer, a bearer context release command message, and sending, by the control element toward a distributed unit of the RAN prior to sending of the bearer context release command for the CWRC bearer, a terminal device context release command for a terminal device of the CWRC bearer. In at least some example embodiments, the bearer context release command for the CWRC bearer is sent based on triggering of a bearer context release procedure by a user plane element of the RAN. In at least some example embodiments, the bearer context release command for the CWRC bearer is sent based on receipt of a bearer context release complete message from a user plane element of the RAN and based on receipt of a terminal device context release complete message for the terminal device of the CWRC bearer. In at least some example embodiments, the CWRC bearer includes one of a bearer including multiple protocol data unit sessions based on multiple respective service data adaptation protocol entities mapped onto access-specific data radio bearers associated with respective packet data convergence protocol entities, a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, or a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access.

In at least some example embodiments, an apparatus includes means for sending, by a control element of a radio access network (RAN) toward a wireless local area network (WLAN) termination element of the RAN, a bearer context setup request message for a cellular - WLAN RAN convergence (CWRC) bearer, and means for receiving, by the control element from the WLAN termination element, a bearer context setup response message for the CWRC bearer. In at least some example embodiments, the bearer context setup request message for the CWRC bearer is sent based on triggering of a bearer context setup procedure by the control element. In at least some example embodiments, the apparatus further includes means for sending, by the control element toward a user plane element of the RAN, a bearer context setup request message. In at least some example embodiments, the apparatus further includes means for sending, by the control element toward a user plane element of the RAN, a bearer context modification request message. In at least some example embodiments, the apparatus further includes means for sending, by the control element toward the WLAN termination element, a bearer context release command for the CWRC bearer, and means for receiving, by the control element from the WLAN termination element, a bearer context release complete message for the CWRC bearer. In at least some example embodiments, the bearer context release command for the CWRC bearer is sent based on triggering of a bearer context release procedure by the control element. In at least some example embodiments, the apparatus further includes means for sending, by the control element toward a user plane element of the RAN prior to sending of the bearer context release command for the CWRC bearer, a bearer context release command message, and means for sending, by the control element toward a distributed unit of the RAN prior to sending of the bearer context release command for the CWRC bearer, a terminal device context release command for a terminal device of the CWRC bearer. In at least some example embodiments, the bearer context release command for the CWRC bearer is sent based on triggering of a bearer context release procedure by a user plane element of the RAN. In at least some example embodiments, the bearer context release command for the CWRC bearer is sent based on receipt of a bearer context release complete message from a user plane element of the RAN and based on receipt of a terminal device context release complete message for the terminal device of the CWRC bearer. In at least some example embodiments, the CWRC bearer includes one of a bearer including multiple protocol data unit sessions based on multiple respective service data adaptation protocol entities mapped onto access-specific data radio bearers associated with respective packet data convergence protocol entities, a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, or a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access.

In at least some example embodiments, an apparatus includes at least one processor and at least one memory storing instructions which, when executed by the at least one processor, cause the apparatus at least to perform receiving, by a wireless local area network (WLAN) termination element of a radio access network (RAN) toward a control element of the RAN, a bearer context setup request message for a cellular - WLAN RAN convergence (CWRC) bearer, and sending, by the WLAN termination element toward the control element, a bearer context setup response message for the CWRC bearer. In at least some example embodiments, a computer-readable storage medium includes computer program code which, when executed by an apparatus, causes the apparatus at least to perform receiving, by a wireless local area network (WLAN) termination element of a radio access network (RAN) toward a control element of the RAN, a bearer context setup request message for a cellular - WLAN RAN convergence (CWRC) bearer, and sending, by the WLAN termination element toward the control element, a bearer context setup response message for the CWRC bearer. In at least some example embodiments, a method includes receiving, by a wireless local area network (WLAN) termination element of a radio access network (RAN) toward a control element of the RAN, a bearer context setup request message for a cellular - WLAN RAN convergence (CWRC) bearer, and sending, by the WLAN termination element toward the control element, a bearer context setup response message for the CWRC bearer. In at least some example embodiments, an apparatus includes means for receiving, by a wireless local area network (WLAN) termination element of a radio access network (RAN) toward a control element of the RAN, a bearer context setup request message for a cellular - WLAN RAN convergence (CWRC) bearer, and means for sending, by the WLAN termination element toward the control element, a bearer context setup response message for the CWRC bearer.

In at least some example embodiments, an apparatus includes at least one processor and at least one memory storing instructions which, when executed by the at least one processor, cause the apparatus at least to perform supporting, by a wireless local area network (WLAN) termination element, a set of communication interfaces for a radio access network (RAN) including a cellular base station (BS), wherein the set of communication interfaces includes a first communication interface configured to support WLAN access by a set of terminal devices, a second communication interface configured to support communications with a control plane element of the cellular BS, and a third communication interface configured to support communications with a user plane element of the cellular BS, and supporting, by the WLAN termination element based on the set of communication interfaces, a cellular - WLAN RAN convergence (CWRC) bearer. In at least some example embodiments, the instructions, when executed by the at least one processor, cause the apparatus at least to perform supporting, by the WLAN termination element, a state machine supporting a set of states, wherein the set of states includes an idle state, an activable state, an active state, an associative state, and a connected state. In at least some example embodiments, the instructions, when executed by the at least one processor, cause the apparatus at least to perform sending, by the WLAN termination element toward the control plane element of the cellular BS, an initialization request message configured to request initiation of the WLAN termination element, and receiving, by the WLAN termination element from the control plane element of the cellular BS, an initialization response message. In at least some example embodiments, the instructions, when executed by the at least one processor, cause the apparatus at least to perform receiving, by the WLAN termination element from the control plane element of the cellular BS, a configuration update message configured for use in updating configuration information of the WLAN termination element, and sending, by the WLAN termination element toward the control plane element of the cellular BS, a configuration update acknowledgment message. In at least some example embodiments, the instructions, when executed by the at least one processor, cause the apparatus at least to perform sending, by the WLAN termination element toward the control plane element of the cellular BS, a configuration update message indicative of updating of configuration information of the WLAN termination element, and receiving, by the WLAN termination element from the control plane element of the cellular BS, a configuration update acknowledgment message. In at least some example embodiments, the instructions, when executed by the at least one processor, cause the apparatus at least to perform receiving, by the WLAN termination element from the control plane element of the cellular BS, a deactivation request message configured to request deactivation of the WLAN termination element, and sending, by the WLAN termination element from the control plane element of the cellular BS, a deactivation response message. In at least some example embodiments, the instructions, when executed by the at least one processor, cause the apparatus at least to perform sending, by the WLAN termination element toward the control plane element of the cellular BS, a terminal device association message configured to indicate association of a terminal device with the WLAN termination element, and receiving, by the WLAN termination element from the control plane element of the cellular BS, a terminal device association acknowledgment message. In at least some example embodiments, the instructions, when executed by the at least one processor, cause the apparatus at least to perform receiving, by the WLAN termination element from the control plane element of the cellular BS, a CWRC bearer context setup request message configured to request setup of context within the WLAN termination element for the CWRC bearer, and sending, by the WLAN termination element from the control plane element of the cellular BS, a CWRC bearer context setup response message. In at least some example embodiments, the instructions, when executed by the at least one processor, cause the apparatus at least to perform receiving, by the WLAN termination element from the control plane element of the cellular BS, a CWRC bearer context modification request message configured to request modification of context within the WLAN termination element for the CWRC bearer, and sending, by the WLAN termination element from the control plane element of the cellular BS, a CWRC bearer context modification response message. In at least some example embodiments, the instructions, when executed by the at least one processor, cause the apparatus at least to perform receiving, by the WLAN termination element from the control plane element of the cellular BS, a CWRC bearer context release request message configured to request release of context within the WLAN termination element for the CWRC bearer, and sending, by the WLAN termination element from the control plane element of the cellular BS, a CWRC bearer context release response message. In at least some example embodiments, the instructions, when executed by the at least one processor, cause the apparatus at least to perform supporting, by the WLAN termination element based on the second communication interface with the control plane element of the cellular BS, a set of application protocol procedures. In at least some example embodiments, the set of application protocol procedures includes at least one of an initialization procedure configured to support initialization of the WLAN termination element, a configuration procedure to support configuration of the WLAN termination element, a deactivation procedure configured to support deactivation of the WLAN termination element, an association process configured to support association of terminal devices with the WLAN termination element, a bearer context setup procedure configured to support setup of bearer context for the CWRC bearer, a bearer context modification procedure configured to support modification of bearer context for the CWRC bearer, a bearer context release procedure configured to support release of bearer context for the CWRC bearer, a statistics subscription procedure configured to support subscription of the control plane element of the cellular BS to receive statistics from the WLAN termination element, a statistics report procedure configured to support reporting of statistics from the WLAN termination element to the control plane element of the cellular BS. In at least some example embodiments, the WLAN termination element comprises a Next Generation - Wireless Local Area Network (WLAN) Termination (NG-WT) element.

In at least some example embodiments, a computer-readable storage medium includes computer program code which, when executed by an apparatus, causes the apparatus at least to perform supporting, by a wireless local area network (WLAN) termination element, a set of communication interfaces for a radio access network (RAN) including a cellular base station (BS), wherein the set of communication interfaces includes a first communication interface configured to support WLAN access by a set of terminal devices, a second communication interface configured to support communications with a control plane element of the cellular BS, and a third communication interface configured to support communications with a user plane element of the cellular BS, and supporting, by the WLAN termination element based on the set of communication interfaces, a cellular - WLAN RAN convergence (CWRC) bearer. In at least some example embodiments, the computer program code, when executed by the apparatus, causes the apparatus at least to perform supporting, by the WLAN termination element, a state machine supporting a set of states, wherein the set of states includes an idle state, an activable state, an active state, an associative state, and a connected state. In at least some example embodiments, the computer program code, when executed by the apparatus, causes the apparatus at least to perform sending, by the WLAN termination element toward the control plane element of the cellular BS, an initialization request message configured to request initiation of the WLAN termination element, and receiving, by the WLAN termination element from the control plane element of the cellular BS, an initialization response message. In at least some example embodiments, the computer program code, when executed by the apparatus, causes the apparatus at least to perform receiving, by the WLAN termination element from the control plane element of the cellular BS, a configuration update message configured for use in updating configuration information of the WLAN termination element, and sending, by the WLAN termination element toward the control plane element of the cellular BS, a configuration update acknowledgment message. In at least some example embodiments, the computer program code, when executed by the apparatus, causes the apparatus at least to perform sending, by the WLAN termination element toward the control plane element of the cellular BS, a configuration update message indicative of updating of configuration information of the WLAN termination element, and receiving, by the WLAN termination element from the control plane element of the cellular BS, a configuration update acknowledgment message. In at least some example embodiments, the computer program code, when executed by the apparatus, causes the apparatus at least to perform receiving, by the WLAN termination element from the control plane element of the cellular BS, a deactivation request message configured to request deactivation of the WLAN termination element, and sending, by the WLAN termination element from the control plane element of the cellular BS, a deactivation response message. In at least some example embodiments, the computer program code, when executed by the apparatus, causes the apparatus at least to perform sending, by the WLAN termination element toward the control plane element of the cellular BS, a terminal device association message configured to indicate association of a terminal device with the WLAN termination element, and receiving, by the WLAN termination element from the control plane element of the cellular BS, a terminal device association acknowledgment message. In at least some example embodiments, the computer program code, when executed by the apparatus, causes the apparatus at least to perform receiving, by the WLAN termination element from the control plane element of the cellular BS, a CWRC bearer context setup request message configured to request setup of context within the WLAN termination element for the CWRC bearer, and sending, by the WLAN termination element from the control plane element of the cellular BS, a CWRC bearer context setup response message. In at least some example embodiments, the computer program code, when executed by the apparatus, causes the apparatus at least to perform receiving, by the WLAN termination element from the control plane element of the cellular BS, a CWRC bearer context modification request message configured to request modification of context within the WLAN termination element for the CWRC bearer, and sending, by the WLAN termination element from the control plane element of the cellular BS, a CWRC bearer context modification response message. In at least some example embodiments, the computer program code, when executed by the apparatus, causes the apparatus at least to perform receiving, by the WLAN termination element from the control plane element of the cellular BS, a CWRC bearer context release request message configured to request release of context within the WLAN termination element for the CWRC bearer, and sending, by the WLAN termination element from the control plane element of the cellular BS, a CWRC bearer context release response message. In at least some example embodiments, the computer program code, when executed by the apparatus, causes the apparatus at least to perform supporting, by the WLAN termination element based on the second communication interface with the control plane element of the cellular BS, a set of application protocol procedures. In at least some example embodiments, the set of application protocol procedures includes at least one of an initialization procedure configured to support initialization of the WLAN termination element, a configuration procedure to support configuration of the WLAN termination element, a deactivation procedure configured to support deactivation of the WLAN termination element, an association process configured to support association of terminal devices with the WLAN termination element, a bearer context setup procedure configured to support setup of bearer context for the CWRC bearer, a bearer context modification procedure configured to support modification of bearer context for the CWRC bearer, a bearer context release procedure configured to support release of bearer context for the CWRC bearer, a statistics subscription procedure configured to support subscription of the control plane element of the cellular BS to receive statistics from the WLAN termination element, a statistics report procedure configured to support reporting of statistics from the WLAN termination element to the control plane element of the cellular BS. In at least some example embodiments, the WLAN termination element comprises a Next Generation - Wireless Local Area Network (WLAN) Termination (NG-WT) element.

In at least some example embodiments, a method includes supporting, by a wireless local area network (WLAN) termination element, a set of communication interfaces for a radio access network (RAN) including a cellular base station (BS), wherein the set of communication interfaces includes a first communication interface configured to support WLAN access by a set of terminal devices, a second communication interface configured to support communications with a control plane element of the cellular BS, and a third communication interface configured to support communications with a user plane element of the cellular BS, and supporting, by the WLAN termination element based on the set of communication interfaces, a cellular - WLAN RAN convergence (CWRC) bearer. In at least some example embodiments, the method further includes supporting, by the WLAN termination element, a state machine supporting a set of states, wherein the set of states includes an idle state, an activable state, an active state, an associative state, and a connected state. In at least some example embodiments, the method further includes sending, by the WLAN termination element toward the control plane element of the cellular BS, an initialization request message configured to request initiation of the WLAN termination element, and receiving, by the WLAN termination element from the control plane element of the cellular BS, an initialization response message. In at least some example embodiments, the method further includes receiving, by the WLAN termination element from the control plane element of the cellular BS, a configuration update message configured for use in updating configuration information of the WLAN termination element, and sending, by the WLAN termination element toward the control plane element of the cellular BS, a configuration update acknowledgment message. In at least some example embodiments, the method further includes sending, by the WLAN termination element toward the control plane element of the cellular BS, a configuration update message indicative of updating of configuration information of the WLAN termination element, and receiving, by the WLAN termination element from the control plane element of the cellular BS, a configuration update acknowledgment message. In at least some example embodiments, the method further includes receiving, by the WLAN termination element from the control plane element of the cellular BS, a deactivation request message configured to request deactivation of the WLAN termination element, and sending, by the WLAN termination element from the control plane element of the cellular BS, a deactivation response message. In at least some example embodiments, the method further includes sending, by the WLAN termination element toward the control plane element of the cellular BS, a terminal device association message configured to indicate association of a terminal device with the WLAN termination element, and receiving, by the WLAN termination element from the control plane element of the cellular BS, a terminal device association acknowledgment message. In at least some example embodiments, the method further includes receiving, by the WLAN termination element from the control plane element of the cellular BS, a CWRC bearer context setup request message configured to request setup of context within the WLAN termination element for the CWRC bearer, and sending, by the WLAN termination element from the control plane element of the cellular BS, a CWRC bearer context setup response message. In at least some example embodiments, the method further includes receiving, by the WLAN termination element from the control plane element of the cellular BS, a CWRC bearer context modification request message configured to request modification of context within the WLAN termination element for the CWRC bearer, and sending, by the WLAN termination element from the control plane element of the cellular BS, a CWRC bearer context modification response message. In at least some example embodiments, the method further includes receiving, by the WLAN termination element from the control plane element of the cellular BS, a CWRC bearer context release request message configured to request release of context within the WLAN termination element for the CWRC bearer, and sending, by the WLAN termination element from the control plane element of the cellular BS, a CWRC bearer context release response message. In at least some example embodiments, the method further includes supporting, by the WLAN termination element based on the second communication interface with the control plane element of the cellular BS, a set of application protocol procedures. In at least some example embodiments, the set of application protocol procedures includes at least one of an initialization procedure configured to support initialization of the WLAN termination element, a configuration procedure to support configuration of the WLAN termination element, a deactivation procedure configured to support deactivation of the WLAN termination element, an association process configured to support association of terminal devices with the WLAN termination element, a bearer context setup procedure configured to support setup of bearer context for the CWRC bearer, a bearer context modification procedure configured to support modification of bearer context for the CWRC bearer, a bearer context release procedure configured to support release of bearer context for the CWRC bearer, a statistics subscription procedure configured to support subscription of the control plane element of the cellular BS to receive statistics from the WLAN termination element, a statistics report procedure configured to support reporting of statistics from the WLAN termination element to the control plane element of the cellular BS. In at least some example embodiments, the WLAN termination element comprises a Next Generation - Wireless Local Area Network (WLAN) Termination (NG-WT) element.

In at least some example embodiments, an apparatus includes means for supporting, by a wireless local area network (WLAN) termination element, a set of communication interfaces for a radio access network (RAN) including a cellular base station (BS), wherein the set of communication interfaces includes a first communication interface configured to support WLAN access by a set of terminal devices, a second communication interface configured to support communications with a control plane element of the cellular BS, and a third communication interface configured to support communications with a user plane element of the cellular BS, and means for supporting, by the WLAN termination element based on the set of communication interfaces, a cellular - WLAN RAN convergence (CWRC) bearer. In at least some example embodiments, the apparatus further includes means for supporting, by the WLAN termination element, a state machine supporting a set of states, wherein the set of states includes an idle state, an activable state, an active state, an associative state, and a connected state. In at least some example embodiments, the apparatus further includes means for sending, by the WLAN termination element toward the control plane element of the cellular BS, an initialization request message configured to request initiation of the WLAN termination element, and means for receiving, by the WLAN termination element from the control plane element of the cellular BS, an initialization response message. In at least some example embodiments, the apparatus further includes means for receiving, by the WLAN termination element from the control plane element of the cellular BS, a configuration update message configured for use in updating configuration information of the WLAN termination element, and means for sending, by the WLAN termination element toward the control plane element of the cellular BS, a configuration update acknowledgment message. In at least some example embodiments, the apparatus further includes means for sending, by the WLAN termination element toward the control plane element of the cellular BS, a configuration update message indicative of updating of configuration information of the WLAN termination element, and means for receiving, by the WLAN termination element from the control plane element of the cellular BS, a configuration update acknowledgment message. In at least some example embodiments, the apparatus further includes means for receiving, by the WLAN termination element from the control plane element of the cellular BS, a deactivation request message configured to request deactivation of the WLAN termination element, and means for sending, by the WLAN termination element from the control plane element of the cellular BS, a deactivation response message. In at least some example embodiments, the apparatus further includes means for sending, by the WLAN termination element toward the control plane element of the cellular BS, a terminal device association message configured to indicate association of a terminal device with the WLAN termination element, and means for receiving, by the WLAN termination element from the control plane element of the cellular BS, a terminal device association acknowledgment message. In at least some example embodiments, the apparatus further includes means for receiving, by the WLAN termination element from the control plane element of the cellular BS, a CWRC bearer context setup request message configured to request setup of context within the WLAN termination element for the CWRC bearer, and means for sending, by the WLAN termination element from the control plane element of the cellular BS, a CWRC bearer context setup response message. In at least some example embodiments, the apparatus further includes means for receiving, by the WLAN termination element from the control plane element of the cellular BS, a CWRC bearer context modification request message configured to request modification of context within the WLAN termination element for the CWRC bearer, and means for sending, by the WLAN termination element from the control plane element of the cellular BS, a CWRC bearer context modification response message. In at least some example embodiments, the apparatus further includes means for receiving, by the WLAN termination element from the control plane element of the cellular BS, a CWRC bearer context release request message configured to request release of context within the WLAN termination element for the CWRC bearer, and means for sending, by the WLAN termination element from the control plane element of the cellular BS, a CWRC bearer context release response message. In at least some example embodiments, the apparatus further includes means for supporting, by the WLAN termination element based on the second communication interface with the control plane element of the cellular BS, a set of application protocol procedures. In at least some example embodiments, the set of application protocol procedures includes at least one of an initialization procedure configured to support initialization of the WLAN termination element, a configuration procedure to support configuration of the WLAN termination element, a deactivation procedure configured to support deactivation of the WLAN termination element, an association process configured to support association of terminal devices with the WLAN termination element, a bearer context setup procedure configured to support setup of bearer context for the CWRC bearer, a bearer context modification procedure configured to support modification of bearer context for the CWRC bearer, a bearer context release procedure configured to support release of bearer context for the CWRC bearer, a statistics subscription procedure configured to support subscription of the control plane element of the cellular BS to receive statistics from the WLAN termination element, a statistics report procedure configured to support reporting of statistics from the WLAN termination element to the control plane element of the cellular BS. In at least some example embodiments, the WLAN termination element comprises a Next Generation - Wireless Local Area Network (WLAN) Termination (NG-WT) element.

### BRIEF DESCRIPTION OF THE DRAWINGS

The teachings herein can be readily understood by considering the following detailed description in conjunction with the accompanying drawings, in which:
FIG. 1 depicts an example embodiment of a cellular - WLAN RAN convergence (CWRC) system configured to support cellular-WLAN RAN convergence based on use of a Next Generation - Wireless Local Area Network (WLAN) Termination (NG-WT);
FIG. 2 depicts an example embodiment of an NG-WT for illustrating an example embodiment of a protocol stack for the NG-WT of the CWRC system of FIG. 1;
FIG. 3 depicts an example embodiment of three cellular-WLAN convergence bearer types which may be supported by the CWRC system of FIG. 1;
FIG. 4 depicts an example embodiment of an NG-WT initialization procedure initiated by the NG-WT to provide WLAN-related capability information to the gNB-CU-CP;
FIG. 5 depicts an example embodiment of an NG-WT state machine for an NG-WT for enabling the NG-WT to transition between idle and connected states;
FIG. 6 depicts an example embodiment of a gNB-initiated NG-WT configuration update procedure used by the gNB-CU-CP to update the configuration of NG-WTs associated with the gNB-CU-CP;
FIG. 7 depicts an example embodiment of an NG-WT-initiated NG-WT configuration update procedure used by the NG-WT to inform the gNB-CU-CP regarding changes to the configuration of the NG-WT which may have been triggered by non-3GPP nodes;
FIG. 8 depicts an example embodiment of an NG-WT deactivation procedure used by the gNB-CU-CP for deactivation of an NG-WT;
FIG. 9 depicts an example embodiment of an NG-WT UE Association procedure used by the NG-WT to inform the gNB-CU-CP about a new UE association;
FIG. 10 depicts an example embodiment of a CWRC bearer context setup procedure used to establish bearer context within the NG-WT as part of setting up CWRC bearers;
FIG. 11 depicts an example embodiment of a CWRC bearer context modification procedure used to modify bearer context within the NG-WT including modifying the configuration of existing bearers, establish new bearers, and releasing existing bearers;
FIG. 12 depicts an example embodiment of a CWRC bearer context release procedure used to release all active CWRC bearers associated with a specific UE;
FIG. 13 depicts an example embodiment of an NG-WT statistics subscription procedure used by the gNB-CU-UP to initiate, modify, or delete one or more statistics subscriptions at the NG-WT;
FIG. 14 depicts an example embodiment of a bearer context setup procedure configured to enable CWRC bearer setup;
FIG. 15 depicts an example embodiment of a bearer context release procedure initiated by the control plane and configured to enable CWRC bearer release;
FIG. 16 depicts an example embodiment of a bearer context release procedure initiated by the user plane and configured to enable CWRC bearer release;
FIG. 17 depicts an example embodiment of a method for use by an NG-WT to support cellular-WLAN RAN convergence in the RAN;
FIG. 18 depicts an example embodiment of a method for use by a control element of a RAN to support cellular-WLAN RAN convergence in the RAN;
FIG. 19 depicts an example embodiment of a method for use by a WLAN termination element of a RAN to support cellular-WLAN RAN convergence in the RAN;
FIG. 20 depicts an example embodiment of a method for use by a terminal device to support cellular-WLAN RAN convergence in the RAN; and
FIG. 21 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments of a cellular - wireless local area network (WLAN) radio access network (RAN) convergence (CWRC) capability are presented. The CWRC capability may be configured to support architectural and procedural solutions for enabling Layer 2 (L2) convergence between cellular and WLAN access within the RAN. The CWRC capability may be configured to support architectural and procedural solutions for enabling L2 convergence between cellular and WLAN access within the RAN in a manner for supporting various types of applications, such as mixed reality (MR) applications, extended reality (XR) applications, or the like, as well as various combinations thereof. The CWRC capability may be configured to support extension of the Third Generation Partnership Project (3GPP) system architecture to incorporate wireless local area network (WLAN) access within the 3GPP access network (typically referred to as the RAN), including extending the 3GPP control plane to support key WLAN operations as well as performance measurement reporting, extension of the 3GPP user plane to incorporate a variety of convergence mechanisms for cellular and WLAN traffic, providing relevant control and user plane interfaces and procedures in support of the above-described capabilities, or the like, as well as various combinations thereof. The CWRC capability may be configured to support a CWRC system architecture that includes a node - called the Next Generation WLAN Termination (NG-WT) - configured for terminating WLAN access within the RAN. The CWRC capability may be configured to support a set of new bearer types - three of which are denoted herein as CWRC Bearer Types A, B, and C - configured for enabling convergence of user traffic across a variety of different scenarios. The CWRC capability may be configured to support a set of communication interfaces for the NG-WT, including an interface for supporting communications between the NG-WT and user equipments (UEs) and interfaces between the NG-WT and the next-generation Node B centralized unit (gNB-CU) where the interfaces between the NG-WT and the gNB-CU may include a control plane interface between the NG-WT and the gNB-CU Control Plane (gNB-CU-CP) element (where such interface may be called Xnw-C) and a user plane interface between the NG-WT and the gNB-CU User Plane (gNB-CU-UP) element (where such interface may be called Xnw-U), either or both of which may be supported by a new XnwAP protocol along with a full suite of XnwAP system procedures and interactions). The CWRC capability may be configured to support a full set of call flows to enable seamless CWRC operations for supporting cellular-WLAN RAN convergence. The CWRC capability may be configured to support various enhancements to various 3GPP System Procedures (e.g., E1AP Bearer Context Setup) for supporting cellular-WLAN RAN convergence. The CWRC capability may be configured to support various enhancements to various protocols, including UE-side protocols and network-side protocols (e.g., Radio Resource Control (RRC) protocol, Packet Data Convergence Protocol (PDCP), Service Data Adaptation Protocol (SDAP), or the like, as well as various combinations thereof) for supporting cellular-WLAN RAN convergence. It will be appreciated that these, as well as various other example embodiments, may be further understood by first considering various aspects of cellular systems more generally.

As networks evolve from Fourth Generation (4G) and Fifth Generation (5G) towards 5G-A, Sixth Generation (6G), and beyond, the industry and enterprise sectors have been leading the efforts to bring emerging applications, such as immersive mixed reality (MR) and extended reality (XR) as well as others, into fruition. Consequently, there is a need for enterprise networks to deliver a pervasive wireless experience that prioritizes both high bandwidth and low latency to seamlessly handle such data-hungry applications. Anchored by both licensed and unlicensed spectrum, such networks are expected to require extreme deployment flexibility, optimized interoperability and fine-grained control, and compatibility with commercial-off-the-shelf (COTS) hardware. While traditionally enterprise verticals have been served by WLANs, with the advent of private 5G, WLAN and 3GPP cellular access often find themselves competing to serve the same applications. While the majority of enterprise traffic currently flows through WLANs due to its ubiquitous presence, WLAN-based networks often suffer from performance limitations (e.g., interference) and struggle to consistently guarantee resources for latency-sensitive applications such as MR and XR. On the other hand, cellular networks offer centralized control and resource guarantees, making them better-suited for ensuring a smooth MR/XR experience. Accordingly, strategically blending the strengths of widely deployed WLAN with the structured nature of cellular network enables both enterprises and service providers to deploy a robust, scalable, and cost-effective enterprise network that delivers the high-performance connectivity demanded by modern applications. Various example embodiments may be configured to support cellular-WLAN convergence based on support for a RAN-level integration of cellular and WLAN radio access technologies (RATs) that enables service providers to seamlessly split, steer, and switch the data streams between different RATs in a manner that is transparent to the core network, where the proposed Layer 2 convergence is configured to enable use of the 3GPP control plane for managing WLAN-related operations, thereby ensuring a high quality of experience (QoE) as demanded by modern applications.

3GPP has introduced limited support for RAN-centric multi-access capabilities within LTE through the Linking with WLAN Aggregation (LWA) and LTE-WLAN Radio Level Integration with Internet Protocol Security (IPSec) Tunnel (LWIP) specifications, which include a Wireless Termination (WT) entity and XwAP and Xw-U protocols. LWA, while attempting to provide a multi-access RAN, also has certain characteristics that have precluded its widespread adoption. First, LWA operations are generally eNB-centric with little room for the WT to incorporate functional autonomy. Second, the statistics collection capabilities are limited and do not leverage advanced statistics features supported by IEEE 802.11k/r and 802.11v. Third, LWA does not allow for fine-grained traffic engineering over cellular and WLAN RATs, limiting its practical usability in large enterprise environments. Also, the LWA specifications have not yet been updated for NR and NG-RAN and, thus, LWA may be ill-equipped for modern enterprise networks. LWIP, on the other hand, introduces additional overhead due to its use of IPSec tunnels, while generally giving lower performance than LWA. Additionally, standardization efforts within 5G NR have focused on integrating WLAN networks with the 5G core through functions such as the Non-3GPP Interworking Function (N3IWF), 5G Trusted Non-3GPP Gateway Function (TNGF), and Trusted WLAN Interworking Function (TWIF). While N3IWF deals with untrusted non-3GPP access, TNGF and TWIF are used for trusted non-3GPP access. At the outset, non-trusted access through N3IWF introduces significant overhead due to the presence of two independent IP layers, a GRE header, an IPSec header, and additional IPSec tunneling encryption. Nonetheless, both N3IWF and TNGF allow for the 5G Access Traffic Steering, Switching, and Splitting (ATSSS) option for traffic steering, switching, and splitting. Network functions related to ATSSS are deployed at both the UE and the UPF (5G core). On the network side, the UPF serves as the convergence point for cellular and WLAN access. ATSSS uses either MPTCP/MPQUIC or a lower layer multi-link technology called ATSSS-LL. Concerning MPTCP and MQUIC, it is noted that, being transport layer protocols, MPTCP and MPQUIC do not have visibility to the lower layers, making them oblivious to L1/L2 optimizations and, thus, sub-optimal for wireless aggregation scenarios. On other hand, ATSSS-LL has an absence of an overlaying protocol to provide switching and splitting services, thus relegating ATSSS-LL to traffic switching functions. In comparing the RAN-centric and core-centric integration approaches, it is noted that RAN-centric approaches typically have drawbacks similar to those of LWA, whereas core-centric approaches generally do not have an LWA counterpart and may have other drawbacks (e.g., negative impact of MEC, LBO inoperability, and so forth). Various example embodiments may be configured to overcame various drawbacks or potential drawbacks of such RAN-centric and core-centric integration approaches based on various example embodiments for supporting architectural and procedural solutions for enabling L2 convergence between cellular and WLAN access within the RAN.

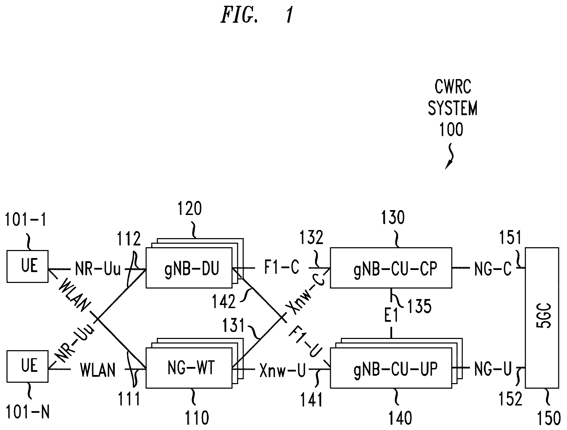

Various example embodiments are configured to support cellular-WLAN convergence within the RAN based on support for Layer 2 convergence between cellular and WLAN access within the RAN. The support for cellular-WLAN convergence within the RAN may be based on architectural and procedural solutions for enabling Layer 2 convergence between cellular and WLAN access within the RAN (e.g., for providing improved or even optimized performance for various types of applications, including emerging applications in the and MR domain). The support for cellular-WLAN convergence within the RAN may be based on a CWRC system architecture that introduces a node called the Next Generation WLAN Termination (NG-WT) for terminating WLAN access within the RAN. The support for cellular-WLAN convergence within the RAN may be based on a set of new CWRC bearers, which may include CWRC Bearers Type A, B, and C, for enabling convergence of user traffic across a variety of different scenarios. The support for cellular-WLAN convergence within the RAN may be based on an interface (denoted as the Xnw interface) between the NG-WT and the gNB-CU where the interface may include a control plane component between the NG-WT and the gNB-CU-CP (denoted as Xnw-C) and a user plane component between the NG-WT and the gNB-CU-UP (denoted as Xnw-U), either or both of which may be supported by a new XnwAP protocol along with an associated suite of XnwAP system procedures and interactions. The support for cellular-WLAN convergence within the RAN may be based on a set of call flows configured to enable seamless CWRC operations. The support for cellular-WLAN convergence within the RAN may be based on various enhancements to various 3GPP System Procedures (e.g., E1AP Bearer Context Setup) to enable the proposed convergence. The support for cellular-WLAN convergence within the RAN may be based on enhancements to both network-side and UE-side protocols (e.g., RRC, PDCP, SDAP, or the like) to allow for the proposed convergence mechanism. The support for cellular-WLAN convergence within the RAN may be based on configuration of the gNB-CU-CP to incorporates support for a new XnwAP protocol which operates over the control plane interface between the gNB-CU-CP and NG-WT, incorporates support for XnwAP operational procedures, incorporate E1AP extensions to allow for compatibility with CWRC bearers, incorporate RRC extensions that enable the management of CWRC bearers, and so forth. The support for cellular-WLAN convergence within the RAN may be based on configuration of the gNB-CU-UP to incorporate SDAP and PDCP extensions that allow traffic mapping, steering, switching, and splitting operations associated with CWRC bearers. The support for cellular-WLAN convergence within the RAN may be based on configuration of the NG-WT to incorporate support for the new XnwAP protocol which operates over the control plane interface between the gNB-CU-CP and NG-WT, incorporate support for XnwAP operational procedures, introduce a new state machine for managing CWRC operations, and so forth. The support for cellular-WLAN convergence within the RAN may be based on configuration of UEs to incorporate RRC extensions that enable the management and configuration of CWRC bearers, in corporate SDAP and PDCP extensions that allow traffic mapping, steering, switching, and splitting operations associated with CWRC bearers, and so forth. It will be appreciated that these, as well as various other example embodiments, may be further understood by way of reference to the example CWRC system architecture as depicted in FIG. 1.

FIG. 1 depicts an example embodiment of a cellular - WLAN RAN convergence (CWRC) system configured to support cellular-WLAN RAN convergence.

As depicted in FIG. 1, CWRC system 100 includes a set of network devices supporting communications of a set of UEs 101-1 to 101-N (collectively, UEs 101). The set of network devices includes a set of NG-WTs 110, a set of gNB-DUs 120, a set of gNB-CU-CPs 130, a set of gNB-CU-UPs 140, and a 5G core (5GC) 150. The NG-WTs 110 support WLAN interfaces 111 with the UEs 101 for WLAN-based communications of the UEs 101. The gNB-DUs 120 support NR-Uu interfaces 112 with the UEs 101 for cellular-based communications of the UEs 101. The NG-WTs 110 are configured to interface with the gNB-CU-CP 130 via Xnw-C interfaces 131 and to interface with the NB-CU-UPs 130 via Xnw-U interfaces 141. The gNB-DUs 120 are configured to interface with the gNB-CU-CP 130 via F1-C interfaces 132 and to interface with the NB-CU-UPs 130 via F1-U interfaces 142. The gNB-CU-CP 130 is configured to interface with the gNB-CU-CPs via E1 interfaces 135. The gNB-CU-CP 130 is configured to interface with the 5GC via an NG-C interface 151. The gNB-CU-UPs 140 are configured to interface with the 5GC via NG-U interfaces 152. It will be appreciated that, although primarily presented with respect to use of a disaggregated RAN deployment (e.g., where the gNB is disaggregated into separate elements), a monolithic RAN deployment (e.g., using integrated gNBs where the NG-WTs 110 interface with the gNBs over Xnw-C interfaces and Xnw-U interfaces) also may be used.

In the CWRC system 100, the UEs 101 may include any terminal devices capable of wireless communication based on both cellular communications and WLAN communications. For example, the UEs 101 may include cellular phones, mobile phones, tablets, personal digital assistants, portable computers, desktop computers, gaming terminal devices, wireless endpoints, mobile stations, smart devices, Internet-of Things (IoT) devices, consumer electronics, gaming systems, industrial devices, medical devices, vehicle-mounted devices, vehicles, drones, head-mounted displays, or the like, as well as various combinations thereof. It will be appreciated that, although primarily presented herein with respect to example embodiments in which the terminal devices communicating via the CWRC system 100 are UEs (illustratively, the UEs 101), various other types of terminal devices may communicate via the CWRC system (e.g., terminal devices such as Subscriber Stations (SSs), Portable Subscriber Station (PSSs), Mobile Stations (MSs), an Access Terminals (ATs), or the like).

In the CWRC system 100, the network devices may be configured to support cellular-WLAN convergence within the RAN. The network devices may be configured to support cellular-WLAN convergence within the RAN based on support for Layer 2 convergence between cellular and WLAN access within the RAN. The NG-WT 110 and the gNB-CU-CPs 130 may be configured to support cellular-WLAN convergence within the RAN based on support for the XnwAP protocol which operates over the Xnw-C interfaces 131 between the NG-WT 110 and the gNB-CU-CPs 130, which may support various procedures for supporting cellular-WLAN convergence within the RAN (e.g., an NG-WT Initialization procedure, a gNB-initiated NG-WT Configuration Update procedure, an NG-WT-initiated NG-WT Configuration procedure, an NG-WT Deactivation procedure, an NG-WT UE Association procedure, a CWRC Bearer Context Setup procedure, a CWRC Bearer Context Modification procedure, a CWRC Bearer Context Release Request procedure, a CWRC Bearer Context Release procedure, an NG-WT Statistics Subscription procedure, an NG-WT Statistics Report procedure, and so forth).

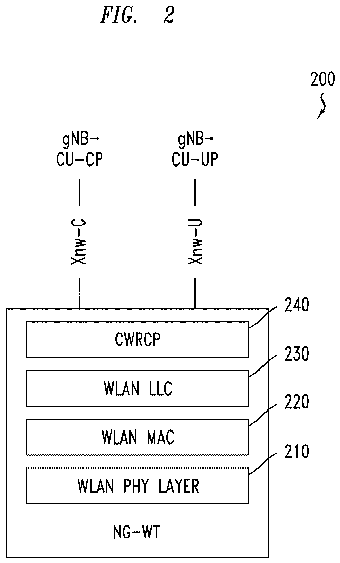

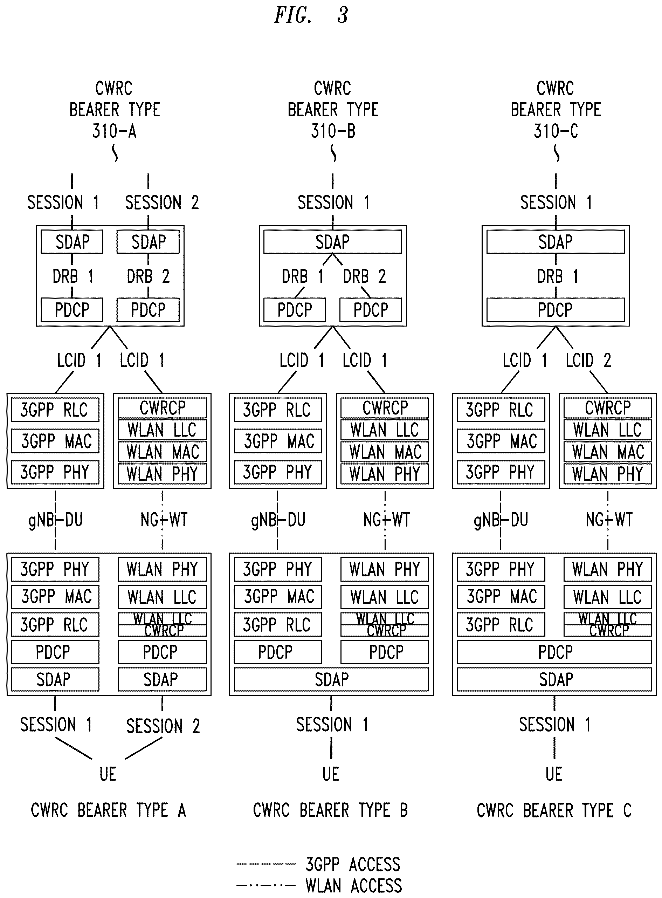

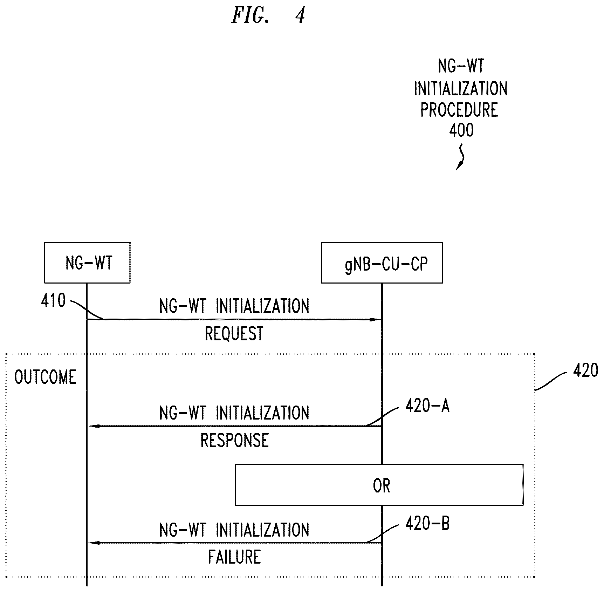

In the CWRC system 100, the network devices may be configured to support cellular-WLAN convergence within the RAN based on support for various other capabilities. For example, the support for cellular-WLAN convergence within the RAN may be based on configuration of the NG-WT 110 (an example embodiment of which is presented in FIG. 2) to introduce a new state machine for managing CWRC operations (an example embodiment of which is presented with respect to FIG. 3), to incorporate support for XnwAP operational procedures based on the XnwAP protocol which operates over the Xnw-C interfaces 131 between the NG-WT 110 and the gNB-CU-CPs 130 (example embodiments of which are presented with respect to FIGs. 4 - 13), and so forth. For example, the support for cellular-WLAN convergence within the RAN may be based on configuration of the gNB-CU-CPs 130 to incorporates support for XnwAP operational procedures a new XnwAP protocol which operates over the control plane interface between the gNB-CU-CP and NG-WT, incorporates support for XnwAP operational procedures based on the XnwAP protocol which operates over the Xnw-C interfaces 131 between the NG-WT 110 and the gNB-CU-CPs 130 (example embodiments of which are presented with respect to FIGs. 4 - 13), incorporate E1AP extensions to allow for compatibility with CWRC bearers, incorporate RRC extensions that enable the management of CWRC bearers, incorporation of SDAP and PDCP extensions to support CWRC bearers (e.g., that allow traffic mapping, steering, switching, and splitting operations associated with CWRC bearers), and so forth.

FIG. 2 depicts an example embodiment of an NG-WT for illustrating an example embodiment of a protocol stack for the NG-WT of the CWRC system of FIG. 1. As depicted in FIG. 2, the NG-WT 200 includes a protocol stack that includes a set of protocols including WLAN physical (PHY) layer 210 (e.g., supporting a WLAN PHY layer protocol(s)), a WLAN Media Access Control (MAC) 220 (e.g., an element supporting a WLAN MAC protocol(s)), a WLAN Logical Link Control (LLC) 230 (e.g., an element supporting a WLAN LLC protocol(s)), and a Cellular-WLAN RAN Convergence Protocol (CWRCP) 240 (e.g., an element supporting the CWRCP). As depicted in FIG. 2, the NR-WT 200 supports communication with a gNB-CU-CP based on an Xnw-C interface and supports communication with a gNB-CU-UP based on an Xnw-U interface. It will be appreciated that, on account of incorporating existing WLAN protocol layers, the NG-WT 200 can be considered to include all functionality associated with legacy WLAN APs, i.e., the NG-WT 200 continues to provide existing WLAN functionality to users (UEs) that are not engaged in cellular-WLAN converged data sessions.

FIG. 3 depicts an example embodiment of three cellular-WLAN convergence bearer types which may be supported by the CWRC system of FIG. 1.

As depicted in FIG. 3, the three cellular-WLAN convergence bearer types 310 include a CWRC bearer type 310-A (denoted more generally herein as CWRC bearer type A or type A bearers), a CWRC bearer type 310-B (denoted more generally herein as CWRC bearer type B or type B bearers), and a CWRC bearer type 310-C (denoted more generally herein as CWRC bearer type C or type C bearers).

The CWRC bearer type 310-A is characterized by the presence of multiple PDU sessions necessitating distinct SDAP entities. These PDU sessions are then mapped onto access-specific (i.e., cellular and WLAN-specific) DRBs represented by corresponding distinct PDCP entities.

The CWRC bearer type 310-B is used when the QoS flows within a single PDU session are mapped to more than one DRB, at least one of which provides WLAN access. In this case, only a single SDAP entity is needed, along with multiple PDCP entities, one for each access-specific DRB.

The CWRC bearer type 310-C is characterized by a single DRB with multiple logical channels, at least one of which is associated with WLAN access. In this case, the QoS flows within a single PDU session can be mapped to a common PDCP entity and then split across multiple LCIDs (e.g., LCID 1 is associated with cellular access, while LCID 2 is associated with WLAN access), such that these bearers involve common SDAP and PDCP entities with distinct RLC and CWRCP entities.

It will be appreciated that the CWRC architecture allows for multiple bearer types to be active at the same time for any given UE, with the bearer choice being governed by relevant network management policies and configured by the RRC. For bearers utilizing a common PDCP entity (e.g., as is the case for CWRC bearer type C), the receiving PDCP entity is responsible for in-sequence delivery of packets to the upper layers. Such in-sequence delivery can be achieved through a windowing mechanism with a CWRC-specific time out parameter configured by the RRC during bearer establishment.

It will be appreciated that, for each of the CWRC bearer types discussed above, the distribution of downlink traffic across cellular and WLAN access may be fully governed by the RAN and completely transparent to the core network, allowing for a single IP address per PDU session, despite the presence of two physically separate access schemes. Within this context, both the F1-U and Xnw-U interfaces carry GTP-encapsulated PDCP PDUs in the downlink and uplink directions. This convergence mechanism is also transparent to the WLAN protocol stack, reusing the existing LWA EtherType 0x9E65 for identification of CWRCP PDUs within the UE. Furthermore, the distribution of uplink traffic across cellular and WLAN access is governed by reflective QoS for type A bearers, network-provided QoS rules for type B bearers, and UE-internal RRM mechanisms for type C bearers.

As discussed above, the CWRC system may support a set of Xnw Application Protocol (XnwAP) procedures configured for supporting cellular-WLAN RAN convergence. The CWRC system may support an Xnw interface for interactions between the NG-WT and the gNB-CU, including the Xnw-U (user plane) interface between the gNB-CU-UP and the NG-WT and the Xnw-C (control plane) interface between the gNB-CU-CP and the NG-WT. Regarding the Xnw-U interface, it is noted that the Xnw-U interface may be identical to the existing Xw-U interface defined in Technical Specification (TS) 36.465 and, further, that the CWRCP PDU structure may be identical to the LWAAP PDU structure described in Clause 6 of TS 36.360. Regarding the Xnw-C interface, however, the Xnw-C interface may be substantially different from the existing Xw-C interface defined in TS 36.463, and consequently, may include enhancements both in terms of procedures as well as the information that is exchanged as part of those procedures. These enhancements may be based on the XnwAP, which may serve as the application layer signaling protocol operating over the Xnw-C interface. The XnwAP may include the procedures as outlined below in Table 1.

**Table 1**

| XnwAP Procedures | | | |
|---|---|---|---|
| Procedure Name | Initiating Message | Successful Outcome | Unsuccessful Outcome |
| NG-WT Initialization | NG-WT Initialization Request | NG-WT Initialization Response | NG-WT Initialization Failure |
| gNB-initiated NG-WT Configuration Update | NG-WT Configuration Update | NG-WT Configuration Update Acknowledge | NG-WT Configuration Update Failure |
| NG-WT-initiated NG-WT Configuration Update | NG-WT Configuration Update | NG-WT Configuration Update Acknowledge | |
| NG-WT Deactivation | NG-WT Deactivation Request | NG-WT Deactivation Response | NG-WT Deactivation Failure |
| NG-WT UE Association | NG-WT UE Association Notification | NG-WT UE Association Acknowledge | NG-WT UE Association Failure |
| CWRC Bearer Context Setup | CWRC Bearer Context Setup Request | CWRC Bearer Context Setup Response | CWRC Bearer Context Setup Failure |
| CWRC Bearer Context Modification | CWRC Bearer Context Modification Request | CWRC Bearer Context Setup Response | CWRC Bearer Context Setup Failure |
| CWRC Bearer Context Release Request | CWRC Bearer Context Release Request | | |
| CWRC Bearer Context Release | CWRC Bearer Context Release Command | CWRC Bearer Context Release Complete | |
| NG-WT Statistics Subscription | NG-WT Statistics Subscription Request | NG-WT Statistics Subscription Acknowledge | NG-WT Statistics Subscription Failure |
| NG-WT Statistics Report | NG-WT Statistics Report | | |

FIG. 4 depicts an example embodiment of an NG-WT initialization procedure initiated by the NG-WT to provide WLAN-related capability information to the gNB-CU-CP.

As depicted in FIG. 4, the NG-WT initialization procedure 400 involves operations by the NG-WT and the gNB-CU-CP, including exchanging of messages between the NG-WT and the gNB-CU-CP. This procedure uses non-UE associated signaling.

At step 410, the NG-WT sends an NG-WT Initialization Request to the gNB-CU-CP. The NG-WT Initialization Request message includes details relating to NG-WT-specific identification information and WLAN-related capability information, which may be in the form of the following information elements (IEs).
- NG-WT ID: Uniquely identifies a given NG-WT within a specific PLMN.
- NG-WT Capability Information: Provides a list of WLAN-related capabilities supported by the NG-WT, including but not limited to the following parameters.
   ▪ WLAN Operating Class: WLAN operating class as defined in the IEEE 802.11 specifications.
   ▪ WLAN Country Code: WLAN country code as defined in the IEEE 802.11 specifications.
   ▪ List of supported WLAN Specifications: E.g., 802.11n, 802.11ac, 802.11ax, 802.11be, 802.1bn, etc.
   ▪ 802.11 ax/be specific parameters -
      - Resource Unit (RU) information for the selected channel
      - Support for Broadcast Target Wake Up Time
   ▪ MIMO Configuration: Provides information on the number of MIMO streams the NG-WT supports.
   ▪ List of supported WLAN Bands: E.g., 2.4 GHz, 5 GHz, 6 GHz, 60 GHz.
   ▪ Transmit Power: The maximum transmit power (dBm) supported by the NG-WT.
   ▪ Retries: Maximum number of L2 retries attempted by the NG-WT for a given packet before failure.
   ▪ MCS Value: The maximum MCS value supported by the NG-WT.
   ▪ Guard Band values: Provides the guard band intervals the NG-WT supports
   ▪ FTM Support: Provides information on whether the NG-WT supports Fine Time Measurement.

At step 420, the gNB-CU-CP responds with either an NG-WT Initialization Response when the initialization is successful (denoted as step 420-A) or an NG-WT Initialization Failure when the initialization is unsuccessful (denoted as step 420-B). The GNB-CU-CP, in the event that the initialization is successful and the gNB-CU-CP sends the NG-WT Initialization Response message, configures WLAN-specific parameters within the NG-WT as part of the NG-WT Initialization Response 420-A. The RAN allows UE association with and establishment of CWRC-related bearers and context for a given NG-WT only upon successful completion of the NG-WT Initialization procedure. The NG-WT Initialization Response message sent by the gNB-CU-CP may include the following IEs.
- Global RAN Node ID: Identifying information for the gNB-CU-CP.
- NG-WT ID: Identifying information for the NG-WT.
- NG-WT Configuration Information: List of parameters along with corresponding values that are used to configure the operation of the NG-WT, including but not limited to the following.
   ▪ Operating Specification: Operating specification as chosen by the gNB-CU-CP.
   ▪ Transmit Power: Maximum transmit power as chosen by the gNB-CU-CP.
   ▪ Retries: Maximum retries as chosen by the gNB-CU-CP.
   ▪ MCS Value: Maximum MCS value as chosen by the gNB-CU-CP.
   ▪ SSID: SSID to be used by the NG-WT for CWRC operations, as defined by the 802.11 specifications.
   ▪ Channel selection: Selecting channel (central frequency) and bandwidth
   ▪ 802.11 ax/be (WLAN 6/7) specific parameters:
      - Number of Resource Units and UE's RU allocation guidance
   ▪ Guard Interval duration
- NG-WT Operational State: e.g., Idle, Activable, Active, Associative, Connected.

With regards to the operational state IE above, an NG-WT can exist in one of four states as defined below.
- Idle: An NG-WT in the idle state does not broadcast any CWRC-related SSID. Note that when an NG-WT is in the Idle state, the associated AP may still participate in regular WLAN operations that are unrelated to CWRC.

- Activable: An NG-WT in the activable state broadcasts a CWRC-related SSID but does not allow for CWRC-related UE association or creation of CWRC bearers.
- Active: An NG-WT in the associative state broadcasts a CWRC-related SSID and allows for CWRC-related UE association but has no UEs associated with it.
- Associative: An NG-WT in the associative state broadcasts a CWRC-related SSID, has CWRC UEs associated with it, but no active CWRC bearers.
- Connected: An NG-WT in the connected state hosts active CWRC bearers, broadcasts a CWRC-related SSID and allows for additional CWRC UE associations.

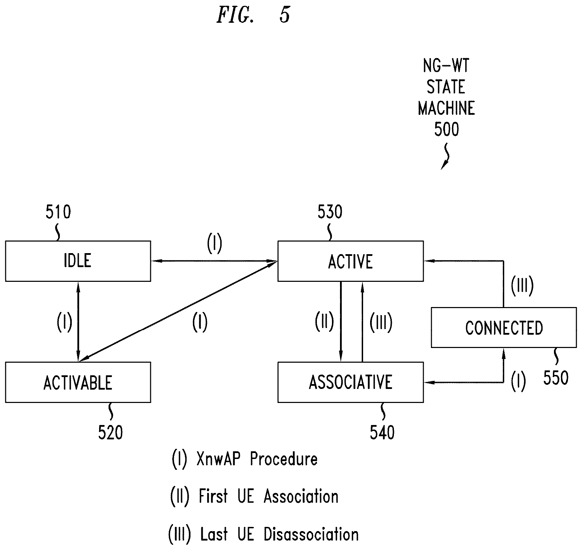

It is noted that the difference between the Associative and Connected states is that, while an NG-WT in the Associative state has UEs associated with it, it does not host any active CWRC bearers for those UEs, unlike the Connected state where the NG-WT hosts one or more CWRC bearers for the UEs associated with it. Furthermore, transitions between the different states are governed by the NG-WT state machine as illustrated in FIG. 5.

FIG. 5 depicts an example embodiment of an NG-WT state machine for an NG-WT for enabling the NG-WT to transition between idle and connected states. As depicted in FIG. 5, upon powering up, an NG-WT is initially in the Idle state 510. Upon receiving the NG-WT initialization response from its peer gNB-CU-CP, the NG-WT may continue to remain in the Idle state 510 or transition to either the Activable state 520 or the Active state 530 through an appropriate XnwAP procedure (e.g., gNB-initiated NG-WT Configuration Update). From there on, an NG-WT in the Active state 530 transitions to the Associative state 540 upon being associated with a UE for the first time. An NG-WT in the Associative state 540 may transition from the Associative state 540 to the Connected state 550 through an XnwAP procedure such as CWRC Bearer Context Setup.

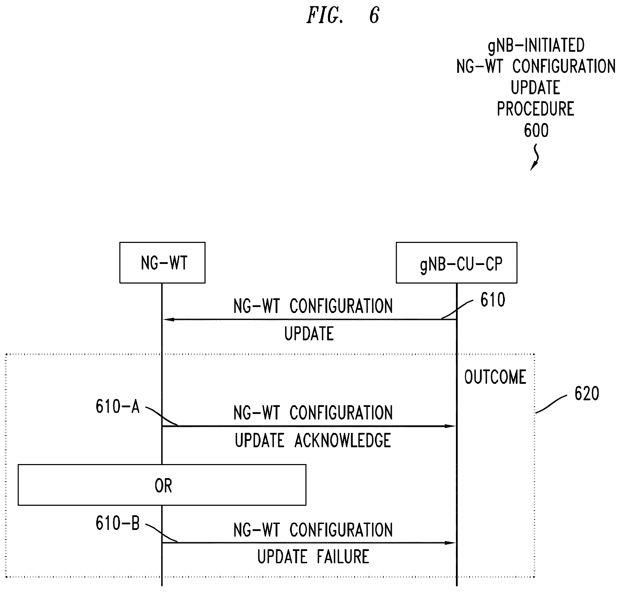

FIG. 6 depicts an example embodiment of a gNB-initiated NG-WT configuration update procedure used by the gNB-CU-CP to update the configuration of NG-WTs associated with the gNB-CU-CP.

As depicted in FIG. 6, the gNB-initiated NG-WT initialization procedure 600 involves operations by the NG-WT and the gNB-CU-CP, including exchanging of messages between the NG-WT and the gNB-CU-CP. This procedure uses non-UE associated signaling.

At step 610, the gNB-CU-CP sends an NG-WT Configuration Update to the NG-WT. The NG-WT Configuration Update message includes the following IEs.
- Global RAN Node ID
- NG-WT ID
- NG-WT Configuration Information
- NG-WT Operational State

At step 620, the NG-WT responds with either an NG-WT Configuration Update Acknowledgment when the update is at least partially successful (denoted as step 620-A) or an NG-WT Configuration Update Failure when the initialization is unsuccessful (denoted as step 620-B). The NG-WT, upon receiving an NG-WT Configuration Update message from the gNB-CU-CP, will update its configuration parameters as outlined in the request.

The NG-WT Configuration Update Acknowledge message conveys the outcome associated with each item in the NG-WT Configuration Information list and includes the following IEs.
- Global RAN Node ID
- NG-WT ID
- NG-WT Configuration Information Outcome: Indicating success (or failure) for each requested configuration item.
- NG-WT Operational State Outcome: Indicating success (or failure) for requested operational state.

The NG-WT Configuration Update Failure message is sent if the NG-WT fails to execute configuration updates for all items in the NG-WT Configuration Information list, as well as fails to update its operational state. The NG-WT Configuration Update Failure to the gNB-CU-CP may include an appropriate Cause value.

It is noted that the gNB-CU-CP cannot force a state transition from the associative or connected states directly as part of the gNB-initiated NG-WT Configuration Update routine; rather, if a transition from the connected state is required, the gNB-CU-UP will first release all bearers associated with the NG-WT through the gNB-initiated CWRC Bearer Release procedure.

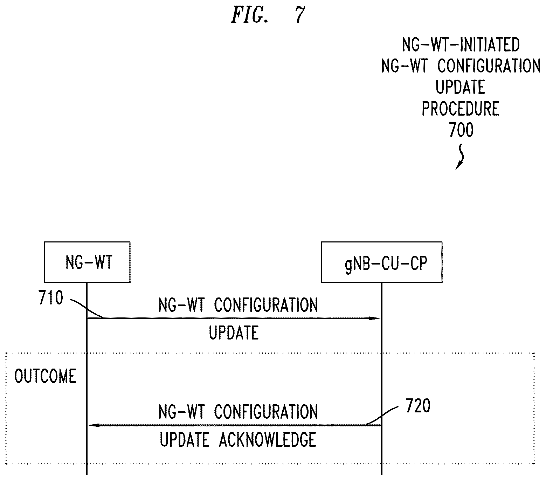

FIG. 7 depicts an example embodiment of an NG-WT-initiated NG-WT configuration update procedure used by the NG-WT to inform the gNB-CU-CP regarding changes to the configuration of the NG-WT which may have been triggered by non-3GPP nodes.

As depicted in FIG. 7, the NG-WT-initiated NG-WT configuration update procedure 700 involves operations by the NG-WT and the gNB-CU-CP, including exchanging of messages between the NG-WT and the gNB-CU-CP. This allows the gNB-CU-CP to update any information it may have regarding the configuration parameters of the NG-WT. This procedure uses non-UE associated signaling.

At step 710, the gNB-CU-CP sends an NG-WT Configuration Update to the gNB-CU-CP. The NG-WT Configuration Update message includes the following IEs.
- Global RAN Node ID
- NG-WT ID
- NG-WT Configuration Information
- NG-WT Operational State

At step 720, the gNB-CU-CP responds with an NG-WT Configuration Update Acknowledgment. Since at this point, the configuration of the NG-WT has already been updated, the gNB-CU-CP sets all outcome-related IEs to indicate success and, thus, the NG-WT-initiated NG-WT Configuration Update procedure has no unsuccessful outcome message.

The NG-WT Configuration Update Acknowledge message conveys the outcome associated with each item in the NG-WT Configuration Information list and includes the following IEs.
- Global RAN Node ID
- NG-WT ID
- NG-WT Configuration Information Outcome: Indicating success for each requested configuration item.
- NG-WT Operational State Outcome: Indicating success for requested operational state.

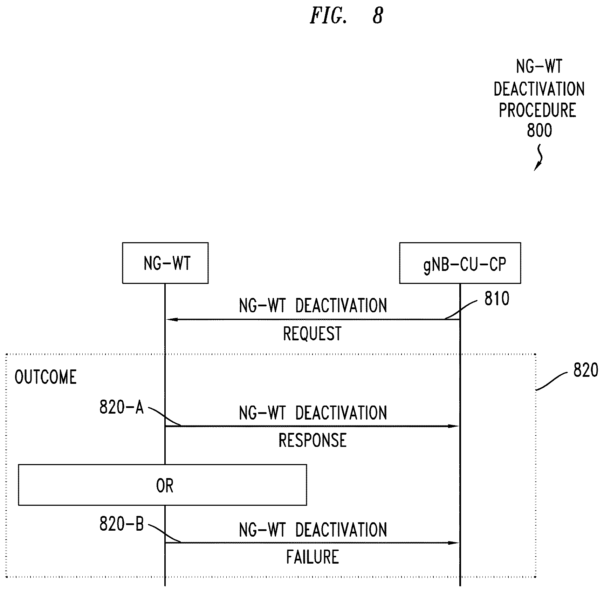

FIG. 8 depicts an example embodiment of an NG-WT deactivation procedure used by the gNB-CU-CP for deactivation of an NG-WT.

As depicted in FIG. 8, the NG-WT deactivation procedure 800 involves operations by the NG-WT and the gNB-CU-CP, including exchanging of messages between the NG-WT and the gNB-CU-CP. This allows the gNB-CU-CP to terminate all CWRC operations associated with an NG-WT, release all existing signaling connections related to XnwAP, and remove any NG-WT-associated context at the gNB-CU-CP, as well as any gNB-associated context at the NG-WT.

At step 810, the gNB-CU-CP sends an NG-WT Deactivation Request to the NG-WT. The NG-WT executes the NG-WT Deactivation Request if the NG-WT is not in the Connected state (if the NG-WT is in the Connected state, the gNB-CU-CP may pursue state transitions through other procedures before attempting the NG-WT Deactivation procedure a second time). The NG-WT Deactivation Request message includes the following IEs.
- Global RAN Node ID: Identifying information for the gNB-CU-CP.
- NG-WT ID: Identifying information for the NG-WT.
- Deactivation Cause: CWRC-specific cause for NG-WT Deactivation, e.g., NG-WT Node Suspension, CWRCC Operation Suspension, Persistent Performance Issues, etc.

At step 820, the NG-WT responds with either an NG-WT Deactivation Response when the deactivation is successful (denoted as step 820-A) or an NG-WT Deactivation Failure when the deactivation is unsuccessful (denoted as step 820-B). The NG-WT Deactivation Failure to the gNB-CU-CP may include an appropriate Cause value.

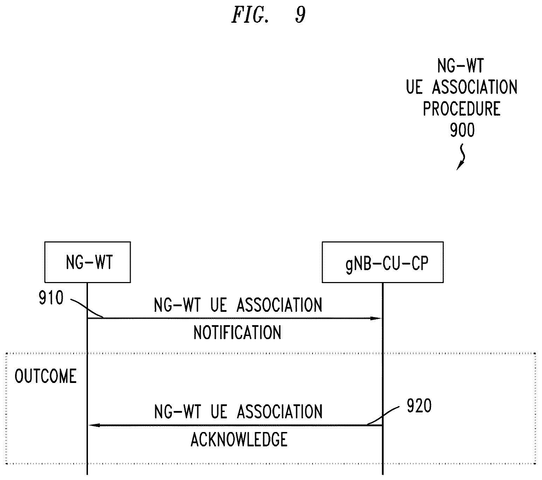

FIG. 9 depicts an example embodiment of an NG-WT UE association procedure used by the NG-WT to inform the gNB-CU-CP about a new UE association.

As depicted in FIG. 9, the NG-WT UE association procedure 900 involves operations by the NG-WT and the gNB-CU-CP, including exchanging of messages between the NG-WT and the gNB-CU-CP. This allows establishment of Xnw-related UE context within the NG-WT and gNB-CU-CP prior to the establishment of CWRC bearers and, upon successful execution of this procedure, a new UE-associated logical Xnw-connection is established. This procedure uses UE associated signaling.

At step 910, the NG-WT sends an NG-WT UE Association Notification to the gNB-CU-CP. The NG-WT UE Association Notification message includes the following IEs.
- NG-WT ID
- NG-WT XnAP UE ID: Identifying information for the UE over the Xnw interface within the NG-WT.
- WLAN UE ID: WiFi MAC address of the UE.

At step 920, the gNB-CU-CP responds with an NG-WT UE Association Acknowledgment. This procedure uses UE-associated signaling and upon receiving the NG-WT UE Association Notification message, the gNB-CU-CP utilizes the MAC address contained within the message to identify the presence of the signaled UE's context within the gNB-CU-CP, i.e., the gNB-CU-CP checks whether this UE is known to it. In the event that the NG-WT UE Association Notification is received for a known UE, the gNB-CU-CP assigns it a gNB UE XnwAP ID and includes that within the NG-WT UE Association Acknowledge response message. Additionally, the gNB-CU-CP marks this UE as being eligible for establishment of CWRC bearers. The NG-WT UE Association Acknowledge message may include the following IEs.
- Global RAN Node ID
- NG-WT ID
- NG-WT XnwAP UE ID
- gNB XnwAP UE ID: Identifying information for the UE over the Xnw interface within the gNB-CU-CP.

It is noted that, although omitted for purposes of clarity, in case that the UE for which the notification is being received is not known to the gNB-CU-CP, the gNB-CU-CP simply discards the notification message without taking further action.

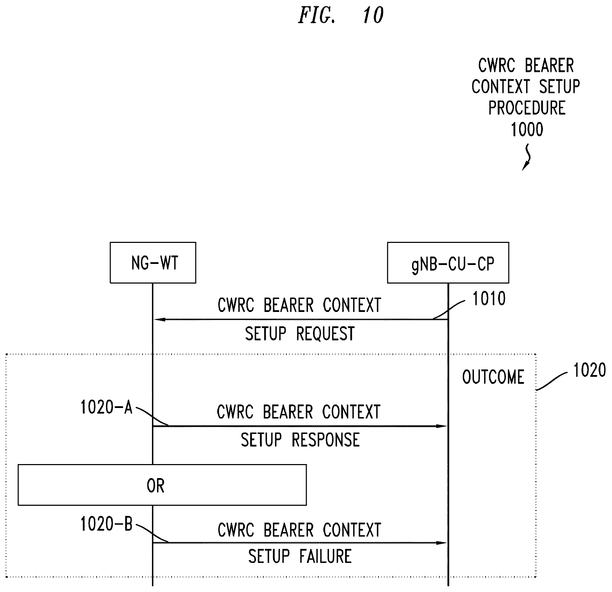

FIG. 10 depicts an example embodiment of a CWRC bearer context setup procedure used to establish bearer context within the NG-WT as part of setting up CWRC bearers.

As depicted in FIG. 10, the CWRC bearer context setup procedure 1000 involves operations by the NG-WT and the gNB-CU-CP, including exchanging of messages between the NG-WT and the gNB-CU-CP. Upon the successful completion of the NG-WT UE Association procedure, both the gNB-CU-CP and the NG-WT include relevant context information that identifies a specific UE as having active air interface connections over cellular (through a given gNB-DU) as well as WLAN (through the NG-WT). Therefore, the UE is now eligible for the establishment of CWRC bearers. As part of setting up CWRC bearers (for which a detailed call flow is presented hereinbelow), the gNB-CU-CP leverages the CWRC Bearer Context Setup procedure 1000 to establish bearer context within the NG-WT. It is noted that the CWRC Bearer Context Setup procedure 1000 is agnostic to the specific bearer type, i.e., A, B, or C.

At step 1010, the gNB-CU-CP sends a CWRC Bearer Context Setup Request to the NG-WT. The CWRC Bearer Context Setup Request message includes information relating to DRB configuration, CWRCP-level rate control, and uplink GTP-U tunnel information towards the gNB-CU-UP, as detailed in the following IEs.
- NG-WT XnwAP UE ID
- gNB XnwAP UE ID
- Serving PLMN: The serving PLMN for this UE.
- CWRC Rate Control: Applied on a per-UE basis summed across all active CWRC bearers at this NG-WT. If enabled, the gNB-CU-CP will also specify the rate control target value, i.e., the maximum possible throughput.
- DRB to be Setup List: For each item in this list: DRB ID, DRB QoS, S-NSSAI, QoS Flows Mapped to DRB, UL User Plane Tunnel Information, DL PDCP SN Length, UL PDCP SN Length.

At step 1020, the NG-WT responds with either a CWRC Bearer Context Setup Response when the setup is successful (denoted as step 1020-A) or a CWRC Bearer Context Setup Failure when the setup is unsuccessful (denoted as step 1020-B). The NG-WT, upon receiving the CWRC Bearer Context Setup Request message from the gNB-CU-CP, establishes and configures the required CWRCP entities in line with the parameters received from the gNB-CU-CP, and establishes downlink GTP-U tunnels for each DRB that is setup in order to allow for user plane traffic from the gNB-CU-UP. The resulting tunnel endpoint identifiers (TEIDs) are returned to the gNB-CU-CP as part of the CWRC Bearer Context Setup Response message, which includes the following IEs.
- NG-WT XnwAP UE ID
- gNB XnwAP UE ID
- Serving PLMN
- DRB Setup List: For each item in this list: DRB ID, DL User Plane Tunnel Information.
- DRB Failed to Setup List: For each item in this list: DRB ID, CWRC-specific Cause.

The CWRC Bearer Context Setup Failure message is sent in the event that the NG-WT is not able to set up any of the requested DRBs. The CWRC Bearer Context Setup Failure to the gNB-CU-CP may include an appropriate CWRC-specific Cause value.

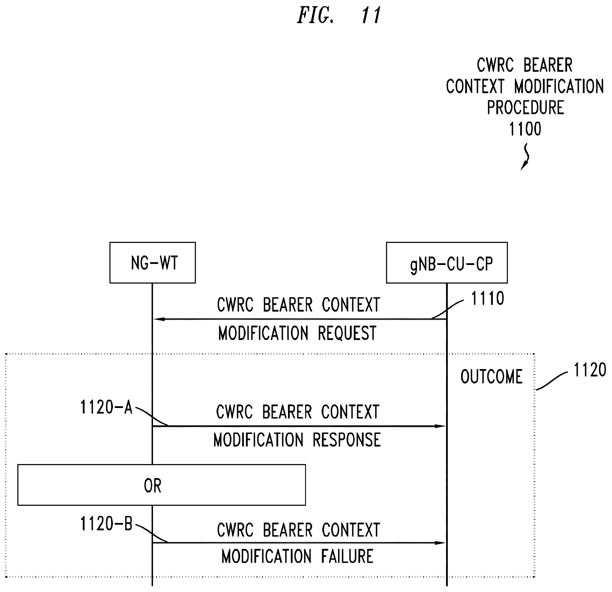

FIG. 11 depicts an example embodiment of a CWRC bearer context modification procedure used to modify bearer context within the NG-WT including modifying the configuration of existing bearers, establish new bearers, and releasing existing bearers.

As depicted in FIG. 11, the CWRC bearer context modification procedure 1100 involves operations by the NG-WT and the gNB-CU-CP, including exchanging of messages between the NG-WT and the gNB-CU-CP. The CWRC bearer context modification procedure is used by the gNB-CU-CP to modify the configuration of existing bearers, establish new bearers, and release already established bearers. As depicted in FIG. 11, the CWRC bearer context modification procedure 1100 is similar to the CWRC bearer context setup procedure 1000 of FIG. 10 in terms of the types of messages that are exchanged.

At step 1110, the gNB-CU-CP sends a CWRC Bearer Context Modification Request to the NG-WT. The CWRC Bearer Context Modification Request message, in addition to the information included in the CWRC Bearer Context Setup Request message, also includes additional lists including a DRB to be Modified List and a DRB to be Released List, as detailed in the following IEs.
- NG-WT XnwAP UE ID
- gNB XnwAP UE ID
- Serving PLMN: The serving PLMN for this UE.
- CWRC Rate Control: Applied on a per-UE basis summed across all active CWRC bearers at this NG-WT. If enabled, the gNB-CU-CP will also specify the rate control target value, i.e., the maximum possible throughput.
- DRB to be Setup List: For each item in this list: DRB ID, DRB QoS, S-NSSAI, QoS Flows Mapped to DRB, UL User Plane Tunnel Information, DL PDCP SN Length, UL PDCP SN Length.
- DRB to be Modified List
- DRB to be Released List
   ▪ DL Forwarding Proposed: If a given DRB for which a release is being signaled belongs to bearer type C, the gNB-CU-CP may request DL data forwarding by including this DL Forwarding Proposed IE in the DRB to be Released Item. The DL Forwarding Proposed IE indicates whether forwarding is being requested, and if so, includes UP Tunnel Information for the forwarding tunnel being set at the gNB-CU-UP.

At step 1120, the NG-WT responds with either a CWRC Bearer Context Modification Response when the modification is successful (denoted as step 1120-A) or a CWRC Bearer Context Modification Failure when the modification is unsuccessful (denoted as step 1120-B). The NG-WT, upon receiving the CWRC Bearer Context Modification Request message from the gNB-CU-CP, modifies the required CWRCP entities in line with the parameters received from the gNB-CU-CP.

The CWRC Bearer Context Modification Response message, in addition to the information included in the CWRC Bearer Context Modification Request message, also includes additional lists including a DRB Modified List, a DRB Failed to be Modified List, and a DRB Released List, as detailed in the following IEs.
- NG-WT XnwAP UE ID
- gNB XnwAP UE ID
- Serving PLMN
- DRB Setup List: For each item in this list: DRB ID, DL User Plane Tunnel Information.
- DRB Failed to Setup List: For each item in this list: DRB ID, CWRC-specific Cause.
- DRB Modified List
- DRB Failed to be Modified List
- DRB Released List: The DRB Released List includes IEs that indicate whether the NG-WT has accepted (or rejected) DL data forwarding proposal from the gNB-CU-CP.

The CWRC Bearer Context Modification Failure message is sent in the event that the NG-WT is not able to modify any of the requested DRBs. The CWRC Bearer Context Modification Failure to the gNB-CU-CP may include an appropriate CWRC-specific Cause value.

It is noted that the NG-WT may not be able to explicitly request bearer context modification. In this case, in the event that the NG-WT wishes to update bearer-related context of its own accord, the NG-WT will first request a release of the bearer (via a CWRC Bearer Context Release Request procedure) and then wait for the gNB-CU-CP to establish a new bearer. The CWRC Bearer Context Release Request procedure, which is omitted from FIG.11 for purposes of clarity, is used by the NG-WT to request the release of one or more CWRC bearers associated with a specific UE. In case the NG-WT requests the release of all CWRC bearers for a given UE, the gNB-CU-CP initiates the CWRC Bearer Context Release procedure, otherwise, the gNB-CU-CP initiates the CWRC Bearer Context Modification procedure. The CWRC Bearer Context Release Request procedure may be composed of a single message- a CWRC Bearer Context Release Request message from the NG-WT to the gNB-CU-CP, including the following IEs.
- NG-WT XnwAP UE ID
- gNB XnwAP UE ID
- DRB Release Requested List: For each item in this list: DRB ID.

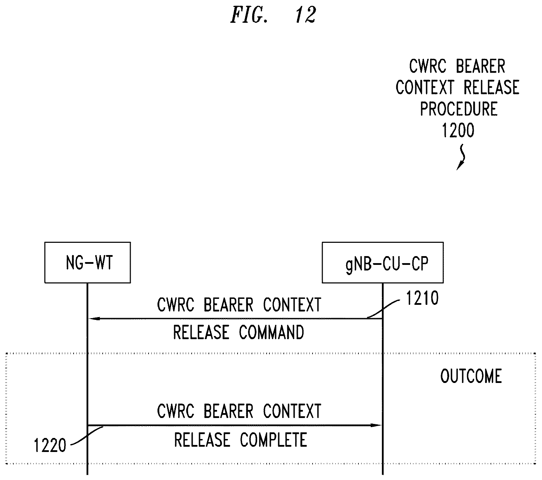

FIG. 12 depicts an example embodiment of a CWRC bearer context release procedure used to release all active CWRC bearers associated with a specific UE.

As depicted in FIG. 12, the CWRC bearer context release procedure 1200 involves operations by the NG-WT and the gNB-CU-CP, including exchanging of messages between the NG-WT and the gNB-CU-CP. The CWRC bearer context release procedure is used by the gNB-CU-CP to release all active CWRC bearers associated with a specific UE, as well as provide the necessary tunnel information for DL data forwarding for type C bearers.

At step 1210, the gNB-CU-CP sends a CWRC Bearer Context Release Request to the NG-WT. The CWRC Bearer Context Release Request message includes the following IEs.
- NG-WT XnwAP UE ID
- gNB XnwAP UE ID
- DRB to be Released List: For each item in this list: DRB ID, DL Forwarding Proposed containing Forwarding Request and Forwarding User Plane Tunnel Information.

At step 1220, the NG-WT responds with a CWRC Bearer Context Release Complete message. The NG-WT, upon receiving the CWRC Bearer Context Release Request message from the gNB-CU-CP, clears all CWRC bearer-related context for the given UE, releases all associated CWRC entities, and suspends the delivery of DL PDCP PDUs. The NG-WT may choose to perform DL data forwarding for one or more of the DRBs for which such forwarding is being requested. The decision of the NG-WT regarding forwarding is provided to the gNB-CU-CP through the CWRC Bearer Context Release Complete message, which includes the following IEs.
- NG-WT XnwAP UE ID
- gNB XnwAP UE ID
- DRB Released List: For each item in this list: DRB ID, DL Forwarding Outcome including Forwarding Request Outcome (if applicable).

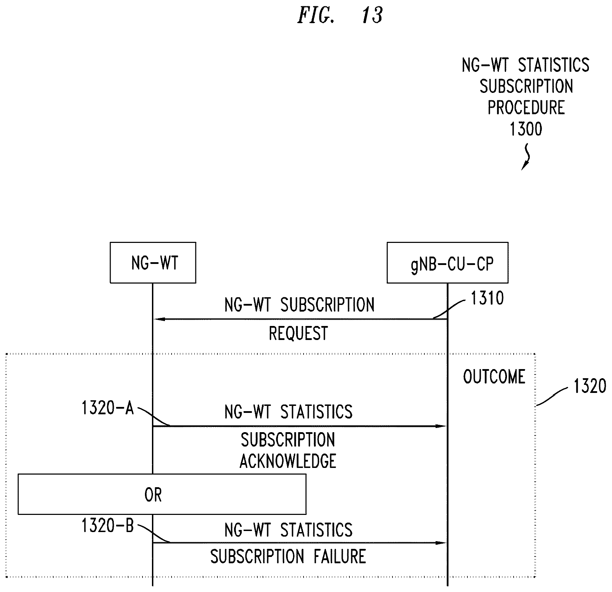

FIG. 13 depicts an example embodiment of an NG-WT statistics subscription procedure used by the gNB-CU-UP to initiate, modify, or delete one or more statistics subscriptions at the NG-WT.

As depicted in FIG. 13, the NG-WT statistics subscription procedure 1300 involves operations by the NG-WT and the gNB-CU-CP, including exchanging of messages between the NG-WT and the gNB-CU-CP. The NG-WT statistics subscription procedure is used by the gNB-CU-CP to initiate, modify, or delete one or more statistics subscriptions at the NG-WT. This procedure uses non-UE-associated signaling.

At step 1310, the gNB-CU-CP sends an NG-WT Subscription Request to the NG-WT. The NG-WT Subscription Request message includes a list of subscriptions to be added, modified, or deleted. It is noted that, since a given subscription item is associated with either the NG-WT itself or with one of its associated UEs for which an active Xnw context is present, the NG-WT Subscription Request message includes the following IEs.
- Global RAN Node ID
- NG-WT ID
- Subscriptions to be Added List → Subscription to be Added Item:
   ▪ Subscription ID: Identifying information for this subscription.
   ▪ Subscription Target Identifier: Either NG-WT or UE (with corresponding NG-WT XnwAP UE ID and gNB XnwAP UE ID).
   ▪ Report Type: Event-specific (with corresponding event) or Periodic (with corresponding periodicity).
   ▪ Report Parameters: List of NG-WT or UE-specific Measurement Parameters being requested.
- Subscriptions to be Modified List → Subscription to be Modified Item:
   ▪ Subscription ID
   ▪ Report Type
   ▪ Report Parameters
- Subscriptions to be Deleted List → Subscription to be Deleted Item:
   ▪ Subscription ID

At step 1320, the NG-WT responds with either an NG-WT Statistics Subscription Acknowledge when the statistics subscription is successful (denoted as step 1320-A) or an NG-WT Statistics Subscription Failure when the subscription is unsuccessful (denoted as step 1320-B).

The NG-WT, upon receiving the NG-WT Statistics Subscription Request message from the gNB-CU-CP, registers the request and returns the NG-WT Statistics Subscription Acknowledge if at least one of the requested subscription-related operations is successful.

The list of NG-WT-specific measurement parameters includes, but is not limited to, the following.
- NG-WT Operational State
- Number of UEs: Number of UEs associated with the NG-WT: (a) With active Xnw contexts, (b) Without active Xnw contexts
- Channel Number: Operating central-frequency/channel of the NG-WT
- Channel Bandwidth: Total bandwidth of the operating channel

The list of UE-specific measurement parameters includes, but is not limited to, the following.
- Average RSSI: Average received signal strength indicator (RSSI/CSI) for a given UE (dBm) as calculated by the NG-WT.
- TX/RX Packets: Number of packets transmitted and received by the NG-WT towards each UE. Measured from when the first CWRC bearer is established for this UE.
- TX Retries: Average number of L2 retries per transmitted packet from the NG-WT to the UE. Measured from when the first CWRC bearer is established for this UE.
- TX Failures: Number of L2 packet transmission failures from the AP towards the UE, after hitting maximum retries value. Measured from when the first CWRC bearer is established for this UE.
- TX MCS Value: Average MCS Value the NG-WT uses for transmitting packets to this UE.
- RX MCS Value: Average MCS Value the UE uses to transmit its L2 packets to the AP.
- Inactive Time: Measures the time elapsed since the last Xnw bearer was released for UEs with an active Xnw context but no active Xnw bearers.
- 802.11 ax/be specific statistics:
   ▪ RU distribution and per-UE RU allocation and utilization
   ▪ Target Wake Time configurations per UE

The NG-WT Statistics Subscription Failure message is sent in the event that none of the requested subscription-related operations is successful. The NG-WT Statistics Subscription Failure to the gNB-CU-CP may include an appropriate CWRC-specific Cause value.

It is noted that an NG-WT Statistics Report procedure may be used by the NG-WT to deliver the statistics requested by the gNB-CU-CP as part of a specific subscription specified during the NG-WT Statistics Subscription procedure. The NG-WT generates a statistics report for each subscription item that is accepted by the NG-WT. These reports are generated either periodically or based on the detection of a specific event as defined in the associated subscription. Consequently, the NG-WT Statistics Report includes the following IEs.
- Global RAN Node ID
- NG-WT ID
- Subscription ID
- Report Parameters with Associated Values
It will be appreciated that the report parameters will include those specific parameters that have been requested as part of the subscription and can belong to either the NG-WT-specific parameter list or the UE-specific parameter list as discussed above within the context of the NG-WT Statistics Subscription procedure.

In addition to the XnwAP procedures described above, CWRC operations relating to bearer setup and modification also may impact the E1 interface between the gNB-CU-CP and the gNB-CU-UP. More specifically, with regards to the E1AP Bearer Context Setup procedure, the following optional IEs may be added to the Bearer Context Setup Request message.
- PDU Session Resource To Setup List >DRB To Setup List >>DRB To Setup Item:
   ▪ DRB Type: One of either cellular, WLAN, or hybrid. DRBs of type cellular and WLAN can be associated with CWRC bearer types A and/or B, while DRBs of type hybrid are only associated with CWRCC bearer type C.
   ▪ QoS Flow QoS Parameters List > QoS Flow Item >> CWRC Fallback DRB ID: Defined for DRBs of type WLAN, the CWRC Fallback DRB ID IE defines a fallback DRB of type cellular to be used for the QoS flow specified based on certain triggering criteria, i.e., the CWRC Fallback Threshold IE defined next.
   ▪ SDAP Configuration > CWRC Fallback Threshold: Defined for DRBs of type WLAN, the CWRC Fallback Threshold IE defines a threshold value, which if exceeded, results in the transmitting SDAP entity switching QoS flows formerly associated with the WLAN DRB to an alternate cellular DRB as specified by the CWRC Fallback DRB ID IE defined above. When provided as part of the SDAP configuration, the CWRC Fallback Threshold is applicable to DRBs associated with CWRC bearers of type B only.
   ▪ PDCP Configuration > CWRC Split Target: Expressed as a percentage and defined for hybrid DRBs only. The CWRC Split Target IE is used by the transmitting PDCP entity to determine the portion of PDCP PDUs that will be submitted to the corresponding RLC entities and those that will be submitted to the corresponding CWRCP entities.
   ▪ PDCP Configuration > CWRC Fallback Threshold: Defined for hybrid DRBs only, the CWRC Fallback Threshold IE defines a threshold value, which if exceeded, results in the transmitting PDCP entity submitting all PDCP PDUs to the corresponding RLC entities only. When provided as part of the PDCP configuration, the CWRC Fallback Threshold is applicable to DRBs associated with CWRC bearers of type C only.
   ▪ PDCP Configuration > CWRC Reordering Timeout: Defined for hybrid DRBs only. The CWRC Reordering Timeout IE is used by the receiving PDCP entity to determine the size of reordering window to be used for PDCP PDUs delivered over different RATs, i.e., cellular or WLAN.

It is noted that the IEs listed above also may be added to the DRB to Modify List included within the Bearer Context Modification Request message as part of the Bearer Context Modification procedure.

As described above, various example embodiments may be based on the CWRC Bearer Context Setup, Modification, and Release procedures as well as the modifications to the E1 Bearer Context Setup and Modification procedures in support of CWRC bearers. Accordingly, provided below are various aspects of overall call flows associated with the establishment of such bearers. In particular, in at least some example embodiments, modifications to the following call flows may be supported for enabling CWRC bearer-related operations within the RAN.
- TS 38.401, Clause 8.9.2: Bearer Context Setup over F1-U
- TS 38.401, Clause 8.9.3.1: gNB-CU-CP Initiated Bearer Context Release
- TS 38.401, Clause 8.9.3.2: gNB-CU-UP Initiated Bearer Context Release

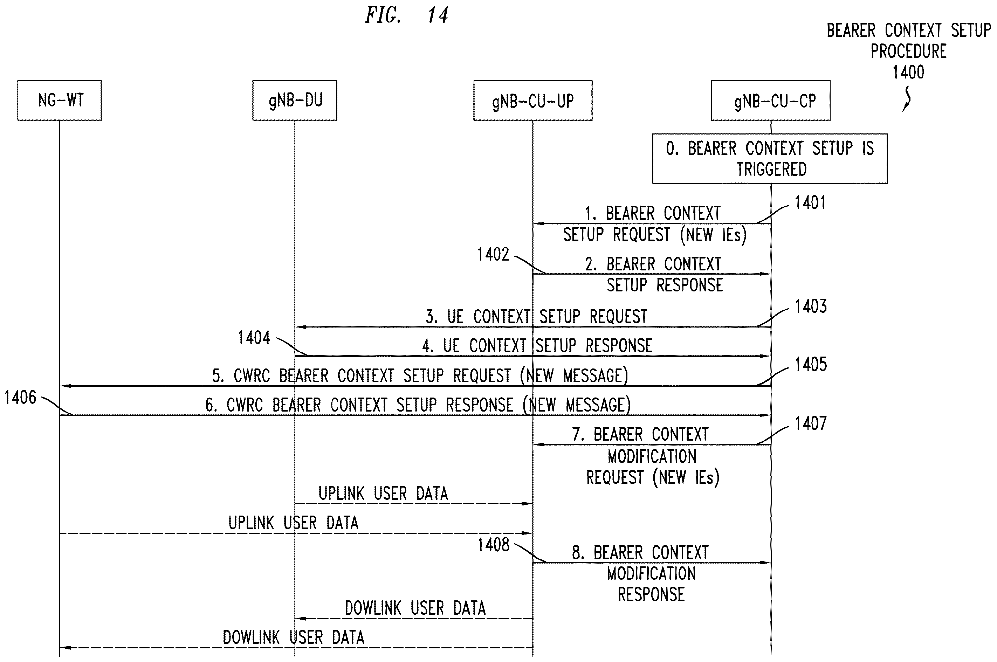

FIG. 14 depicts an example embodiment of a bearer context setup procedure configured to enable CWRC bearer setup.

As depicted in FIG. 14, the bearer context setup procedure 1400 involves operations by the gNB-CU-CP, the gNB-CU-UP, the gNB-DU, and the NG-WT.

As depicted in FIG. 14, the bearer context setup procedure 1400 may be a modified version of the procedure defined in Clause 8.9.2 of TS 38.401, which is modified to enable CWRC bearer setup. As discussed further below, the modifications to the procedure defined in Clause 8.9.2 of TS 38.401 may include (1) modification of the E1AP Bearer Context Setup Request and the E1AP Bearer Context Modification Request messages to include the new IEs as defined hereinabove and (2) incorporation of at least two new messages involving the NG-WT, namely, the CWRC Bearer Context Setup Request and CWRC Bearer Context Setup Response messages, which are responsible for establishing CWRC bearers.

As depicted in FIG. 14, the bearer context setup procedure 1400 may proceed as follows when bearer context setup is triggered by the gNB-CU-CP. At step 1401, the gNB-CU-CP sends a bearer context setup request to the gNB-CU-UP. The bearer context setup request may include the IEs defined in step 1010 of FIG. 10. At step 1402, the gNB-CU-UP responds by sending a bearer context setup response to the gNB-CU-CP. The bearer context setup response may include the IEs defined in step 1020 of FIG. 10. At step 1403, the gNB-CU-CP sends a UE context setup request to the gNB-DU. At step 1404, the gNB-DU responds by sending a UE context setup response to the gNB-CU-CP. At step 1405, the gNB-CU-CP sends a CWRC bearer context setup request to the NG-WT. At step 1406, the NG-WT responds by sending a CWRC bearer context setup response to the gNB-CU-CP. At step 1407, the gNB-CU-CP sends a bearer context modification request to the gNB-CU-UP. The bearer context modification request may include the IEs defined in step 1110 of FIG. 11. At step 1408, the gNB-CU-UP sends a bearer context modification response to the gNB-CU-CP. The bearer context modification request may include the IEs defined in step 1120 of FIG. 11. It is noted that the flow up uplink and downlink user data in the user plane also is illustrated.

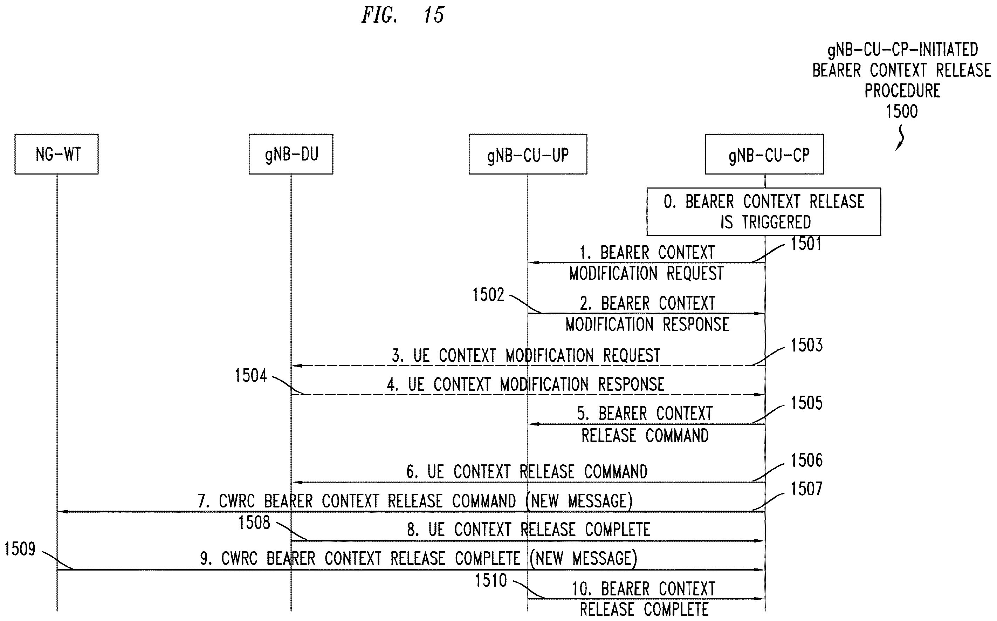

FIG. 15 depicts an example embodiment of a bearer context release procedure initiated by the control plane and configured to enable CWRC bearer release.

As depicted in FIG. 15, the bearer context release procedure 1500 involves operations by the gNB-CU-CP, the gNB-CU-UP, the gNB-DU, and the NG-WT.

As depicted in FIG. 15, the bearer context release procedure 1500 may be a modified version of the procedure defined in Clause 8.9.3.1 of TS 38.401, which is modified to enable CWRC bearer release. As discussed further below, the modifications to the procedure defined in Clause 8.9.3.1 of TS 38.401 may include incorporation of at least two new messages involving the NG-WT, namely, the CWRC Bearer Context Release Command and CWRC Bearer Context Release Complete messages, which are responsible for releasing CWRC bearers.

As depicted in FIG. 15, the bearer context release procedure 1500 may proceed as follows when bearer context release is triggered by the gNB-CU-CP. At step 1501, the gNB-CU-CP may send a bearer context modification request to the gNB-CU-UP. At step 1502, the gNB-CU-UP may respond by sending a bearer context modification response to the gNB-CU-CP. At step 1503, the gNB-CU-CP may send a UE context modification request to the gNB-CU-UP. At step 1504, the gNB-CU-UP may respond by sending a UE context modification response to the gNB-CU-CP. At step 1505, the gNB-CU-CP sends a bearer context release command to the gNB-CU-UP. At step 1506, the gNB-CU-CP sends a UE context release command to the gNB-DU. At step 1507, the gNB-CU-CP sends a CWRC bearer context release command to the NG-WT. The CWRC bearer context release command may include IEs as defined in step 1210 of FIG. 12. At step 1508, the gNB-DU responds by sending a UE context release complete message to the gNB-CU-CP. At step 1509, the NG-WT responds by sending a CWRC bearer context release complete message to the gNB-CU-CP. The CWRC bearer context release complete message may include IEs as defined in step 1220 of FIG. 12. At step 1510, the GNB-CU-UP responds by sending a bearer context release complete message to the gNB-CU-CP.

It will be appreciated that PDCP status preservation is not applicable to CWRC bearers, and therefore, the CWRC Bearer Context Modification procedure is not part of the call flow illustrated in FIG. 15.

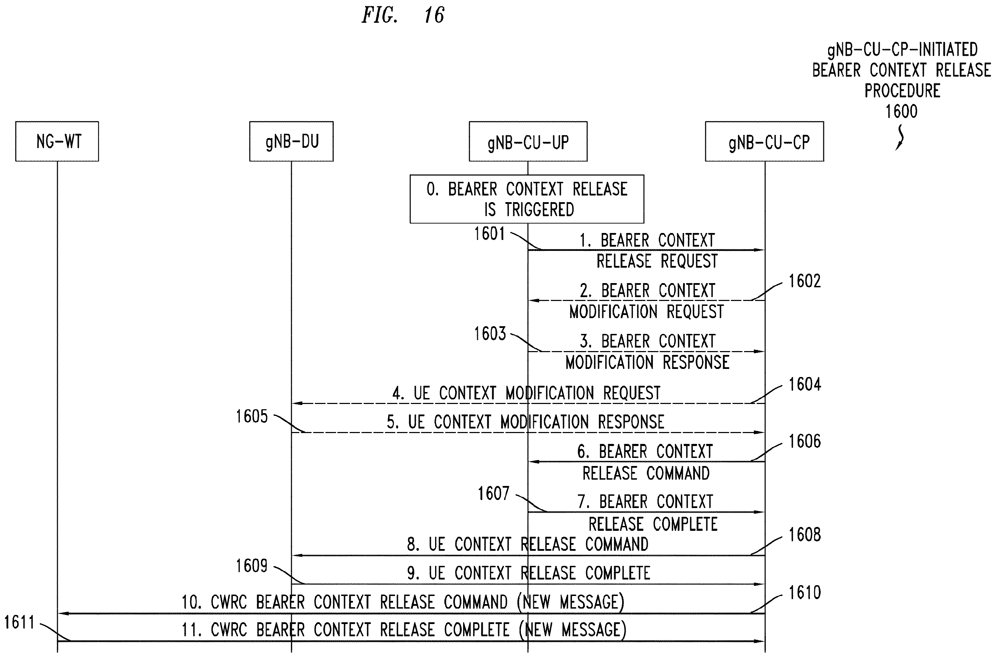

FIG. 16 depicts an example embodiment of a bearer context release procedure initiated by the user plane and configured to enable CWRC bearer release.

As depicted in FIG. 16, the bearer context release procedure 1600 involves operations by the gNB-CU-CP, the gNB-CU-UP, the gNB-DU, and the NG-WT.

As depicted in FIG. 16, the bearer context release procedure 1600 may be a modified version of the procedure defined in Clause 8.9.3.2 of TS 38.401, which is modified to enable CWRC bearer release. As discussed further below, the modifications to the procedure defined in Clause 8.9.3.2 of TS 38.401 may include incorporation of two new messages involving the NG-WT, namely, the CWRC Bearer Context Release Command and CWRC Bearer Context Release Complete messages, which are responsible for releasing CWRC bearers.

As depicted in FIG. 16, the bearer context release procedure 1600 may proceed as follows when bearer context release is triggered by the gNB-CU-UP. At step 1601, the gNB-CU-CP sends a bearer context release request to the gNB-CU-CP. At step 1602, the gNB-CU-CP may send a bearer context modification request to the gNB-CU-UP. At step 1603, the gNB-CU-UP may respond by sending a bearer context modification response to the gNB-CU-CP. At step 1604, the gNB-CU-CP may send a UE context modification request to the gNB-CU-UP. At step 1605, the gNB-CU-UP may respond by sending a UE context modification response to the gNB-CU-CP. At step 1606, the gNB-CU-CP sends a bearer context release command to the gNB-CU-UP. At step 1607, the gNB-CU-UP sends a bearer context release complete message to the gNB-CU-CP. At step 1608, the gNB-CU-CP sends a UE context release command to the gNB-DU. At step 1609, the gNB-DU responds by sending a UE context release complete message to the gNB-CU-CP. At step 1610, the gNB-CU-CP sends a CWRC bearer context release command to the NG-WT. The CWRC bearer context release command may include IEs as defined in step 1210 of FIG. 12. At step 1611, the NG-WT responds by sending a CWRC bearer context release complete message to the gNB-CU-CP. The CWRC bearer context release complete message may include IEs as defined in step 1220 of FIG. 12.

It will be appreciated that PDCP status preservation is not applicable to CWRC bearers, and therefore, the CWRC Bearer Context Modification procedure is not part of the call flow illustrated in FIG. 16.

The CWRC capability may be supported based on various protocols. The CWRC capability may be supported based on various Layer 2 protocols. For example, the CWRC capability may be supported using the RRC, SDAP, and PDCP protocols. The CWRC capability may be supported based on a new protocol, called the CWRC Protocol (CWRCP), which may be deployed within the NG-WT.

The CWRC capability may be supported based on the RRC protocol. The CWRC capability may be supported based on various enhancements to the RRC protocol.

For example, the CWRC capability may be supported based on enhancement of the RRC protocol to support various RRC connection control functions.

For example, the following may be added to Clause 4.4 of TS 38.331: (1) CWRC bearer setup, modification, and release and (2) CWRC bearer type selection and configuration in terms of CWRC rate control and split target parameters.

For example, the following information may be added to the UECapabilityInformation message defined in TS 38.331:
- UECapabilityInformation > UECapabilityInformation-IEs > ue-CapabilityRAT-ContainerList > UE-CapabilityRAT-Container (Type: UE-NR-Capability) > UE-NR-Capability-v1530 > ... > UE-NR-Capability-vXXXX:
   ▪ cwrc-Parameters-rX including the following optional parameters:
      - cwrc-UE-Layer2-Id: Unique UE-specific Layer 2 identifier used for CWRC-related operations, e.g., XnwAP UE IDs may be derived from this Layer 2 ID.
      - cwrc-TypeA-DL-rX: Indicates support for CWRC type A bearers in the downlink.
      - cwrc-TypeB-DL-rX: Indicates support for CWRC type B bearers in the downlink.
      - cwrc-TypeC-DL-rX: Indicates support for CWRC type C bearers in the downlink.
      - cwrc-TypeA-UL-rX: Indicates support for CWRC type A bearers in the uplink.
      - cwrc-TypeB-UL-rX: Indicates support for CWRC type B bearers in the uplink.
   ▪ cwrc-TypeC-UL-rX: Indicates support for CWRC type C bearers in the uplink.

For example, RRCConnectionReconfiguration message used as part of the RRC reconfiguration procedure defined in Clause 5.3.5, TS 38.331, may be extended to incorporate the following content:
- RRCReconfiguration > RRCReconfiguration-IEs > RadioBearerConfig > DRB-ToAddModList > DRB-ToAddMod:
   ▪ ...
   ▪ drb-Type: Either cellular, WLAN, or hybrid.
   ▪ cwrc-Type: Either Type A, B, or C.
   ▪ cnAssociation > SDAP-Config:
      - ...
      - fallbackQoS-FlowsToAdd: For cellular DRBs only. Specifies the QoS flows for which this DRB provides CWRC fallback capabilities.
      - cwrc-FallbackTreshold: For WLAN DRBs only. Defined in Section 7.2.2.
   ▪ PDCP-Config:
      - ....
      - cwrc-SplitTarget: For hybrid DRBs only. Defined in Section 7.2.2.
      - cwrc-FallbackTreshold: For hybrid DRBs only. Defined in Section 7.2.2.
      - cwrc-ReorderingTimeout: For hybrid DRBs only. Defined in Section 7.2.2.
- RRCReconfiguration > RRCReconfiguration-IEs > RRCReconfiguration-v1530-IEs > ... > RRCReconfiguration-vXXXX-IEs > cwrc-Configuration-rX:
   ▪ cwrc-NG-WT-Layer2-Id: Unique NG-WT-specific Layer 2 identifier used for CWRC-related operations, e.g., XnwAP UE IDs may be derived from this Layer 2 ID.

For example, upon receiving an RRCConnectionReconfiguration message with the aforementioned parameters, the UE may set up the relevant bearers including any associated PDCP and SDAP entities.

For example, in order to assist the RRC with regards to the decision making associated with CWRC Bearer Context Modification and Release procedures, additional parameters also may be introduced for the LogMeasResultListWLAN IE as follows:
- LogMeasResultListWLAN > LogMeasResultWLAN > cwrc-Status:
   ▪ cwrc-LastPDU: Indicates time elapsed since last CWRCP PDU was received and processed by any CWRCP entity associated with a bearer involving AP for which this report is being generated.
   ▪ cwrc-TimeoutEvent: Defined for bearers of type C only. Indicates the number of times the cwrc-ReorderingTimeout has expired since this report was last generated.

It will be appreciated that the CWRC capability may be supported based on the RRC protocol in various other ways.

The CWRC capability may be supported based on the SDAP. The CWRC capability may be supported based on various enhancements to the SDAP.

For example, for CWRC bearers of type B, the SDAP may incorporate a fallback mechanism where, if the value defined in the CWRC Fallback Threshold IE is exceeded, the transmitting SDAP entity switches QoS flows formerly associated with the WLAN DRB to an alternate cellular DRB as specified by the CWRC Fallback DRB ID IE.

It will be appreciated that the CWRC capability may be supported based on the SDAP in various other ways.

The CWRC capability may be supported based on the PDCP. The CWRC capability may be supported based on various enhancements to the PDCP.

For example, for hybrid DRBs, i.e., involving CWRC bearers of type C, the transmitting PDCP may be responsible for distribution of traffic across the cellular and WLAN RATs in accordance with the value configured in the CWRC Split Target IE. For example, the transmitting PDCP entity can also suspend PDU delivery to CWRCP entities in the event that the CWRC Fallback Threshold IE is exceeded. For example, for hybrid DRBs, the receiving PDCP entity may be responsible for recording the received PDCP PDUs based on the window size configured as part of the CWRC Reordering Timeout IE.

It will be appreciated that the CWRC capability may be supported based on the PDCP in various other ways.

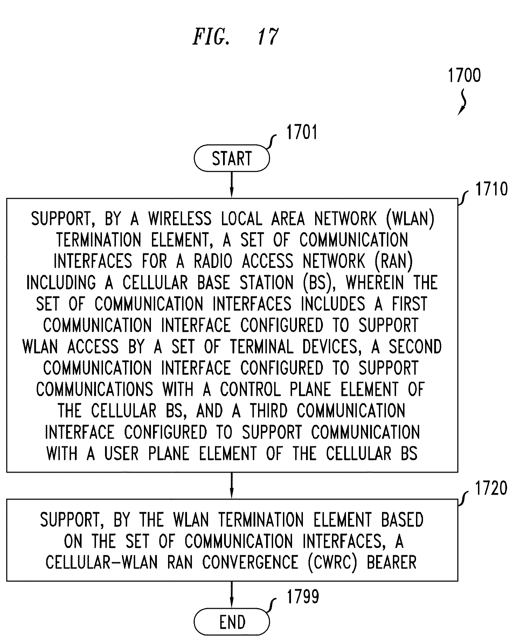

FIG. 17 depicts an example embodiment of a method for use by an NG-WT to support cellular-WLAN RAN convergence in the RAN. It will be appreciated that, although primarily presented herein as being performed serially, at least a portion of the functions of method 1700 may be performed contemporaneously or in a different order than as presented in FIG. 17. At block 1701, the method 1700 begins. At block 1710, support, by a wireless local area network (WLAN) termination element, a set of communication interfaces for a radio access network (RAN) including a cellular base station (BS), wherein the set of communication interfaces includes a first communication interface configured to support WLAN access by a set of terminal devices, a second communication interface configured to support communications with a control plane element of the cellular BS, and a third communication interface configured to support communications with a user plane element of the cellular BS. At block 1720, support, by the WLAN termination element based on the set of communication interfaces, a cellular - WLAN RAN convergence (CWRC) bearer. At block 1799, the method 1700 ends. In at least some example embodiments of the method 1700, the method may include supporting, by the WLAN termination element, a state machine supporting a set of states, wherein the set of states includes an idle state, an activable state, an active state, an associative state, and a connected state. In at least some example embodiments of the method 1700, the method may include sending, by the WLAN termination element toward the control plane element of the cellular BS, an initialization request message configured to request initiation of the WLAN termination element, and receiving, by the WLAN termination element from the control plane element of the cellular BS, an initialization response message. In at least some example embodiments of the method 1700, the method may include receiving, by the WLAN termination element from the control plane element of the cellular BS, a configuration update message configured for use in updating configuration information of the WLAN termination element, and sending, by the WLAN termination element toward the control plane element of the cellular BS, a configuration update acknowledgment message. In at least some example embodiments of the method 1700, the method may include sending, by the WLAN termination element toward the control plane element of the cellular BS, a configuration update message indicative of updating of configuration information of the WLAN termination element, and receiving, by the WLAN termination element from the control plane element of the cellular BS, a configuration update acknowledgment message. In at least some example embodiments of the method 1700, the method may include receiving, by the WLAN termination element from the control plane element of the cellular BS, a deactivation request message configured to request deactivation of the WLAN termination element, and sending, by the WLAN termination element from the control plane element of the cellular BS, a deactivation response message. In at least some example embodiments of the method 1700, the method may include sending, by the WLAN termination element toward the control plane element of the cellular BS, a terminal device association message configured to indicate association of a terminal device with the WLAN termination element, and receiving, by the WLAN termination element from the control plane element of the cellular BS, a terminal device association acknowledgment message. In at least some example embodiments of the method 1700, the method may include receiving, by the WLAN termination element from the control plane element of the cellular BS, a CWRC bearer context setup request message configured to request setup of context within the WLAN termination element for the CWRC bearer, and sending, by the WLAN termination element from the control plane element of the cellular BS, a CWRC bearer context setup response message. In at least some example embodiments of the method 1700, the method may include receiving, by the WLAN termination element from the control plane element of the cellular BS, a CWRC bearer context modification request message configured to request modification of context within the WLAN termination element for the CWRC bearer, and sending, by the WLAN termination element from the control plane element of the cellular BS, a CWRC bearer context modification response message. In at least some example embodiments of the method 1700, the method may include receiving, by the WLAN termination element from the control plane element of the cellular BS, a CWRC bearer context release request message configured to request release of context within the WLAN termination element for the CWRC bearer, and sending, by the WLAN termination element from the control plane element of the cellular BS, a CWRC bearer context release response message. In at least some example embodiments of the method 1700, the method may include supporting, by the WLAN termination element based on the second communication interface with the control plane element of the cellular BS, a set of application protocol procedures. In at least some example embodiments of the method 1700, the set of application protocol procedures includes at least one of an initialization procedure configured to support initialization of the WLAN termination element, a configuration procedure to support configuration of the WLAN termination element, a deactivation procedure configured to support deactivation of the WLAN termination element, an association process configured to support association of terminal devices with the WLAN termination element, a bearer context setup procedure configured to support setup of bearer context for the CWRC bearer, a bearer context modification procedure configured to support modification of bearer context for the CWRC bearer, a bearer context release procedure configured to support release of bearer context for the CWRC bearer, a statistics subscription procedure configured to support subscription of the control plane element of the cellular BS to receive statistics from the WLAN termination element, a statistics report procedure configured to support reporting of statistics from the WLAN termination element to the control plane element of the cellular BS. In at least some example embodiments, the WLAN termination element comprises a Next Generation - Wireless Local Area Network (WLAN) Termination (NG-WT) element. It will be appreciated that various other example embodiments, including various capabilities described herein as being supported by the NG-WT, may be incorporated within the context of the method 1700 of FIG. 17.

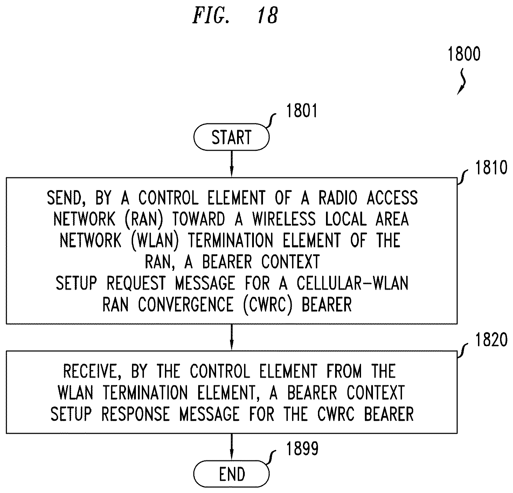

FIG. 18 depicts an example embodiment of a method for use by a control element of a RAN to support cellular-WLAN RAN convergence in the RAN. It will be appreciated that, although primarily presented herein as being performed serially, at least a portion of the functions of method 1800 may be performed contemporaneously or in a different order than as presented in FIG. 18. At block 1801, the method 1800 begins. At block 1810, send, by a control element of a radio access network (RAN) toward a wireless local area network (WLAN) termination element of the radio access network, a bearer context setup request message for a cellular - WLAN RAN convergence (CWRC) bearer. At block 1820, receive, by the control element from the WLAN termination element, a bearer context setup response message for the CWRC bearer. At block 1899, the method 1800 ends. In at least some example embodiments of the method 1800, the bearer context setup request message for the CWRC bearer is sent based on triggering of a bearer context setup procedure by the control element. In at least some example embodiments of the method 1800, the method may include sending, by the control element toward a user plane element of the RAN, a bearer context setup request message. In at least some example embodiments of the method 1800, the method may include sending, by the control element toward a user plane element of the RAN, a bearer context modification request message. In at least some example embodiments of the method 1800, the method may include sending, by the control element toward the WLAN termination element, a bearer context release command for the CWRC bearer and receiving, by the control element from the WLAN termination element, a bearer context release complete message for the CWRC bearer. In at least some example embodiments of the method 1800, the bearer context release command for the CWRC bearer is sent based on triggering of a bearer context release procedure by the control element. In at least some example embodiments of the method 1800, the method may include sending, by the control element toward a user plane element of the RAN prior to sending of the bearer context release command for the CWRC bearer, a bearer context release command message, and sending, by the control element toward a distributed unit of the RAN prior to sending of the bearer context release command for the CWRC bearer, a terminal device context release command for a terminal device of the CWRC bearer. In at least some example embodiments of the method 1800, the bearer context release command for the CWRC bearer is sent based on triggering of a bearer context release procedure by a user plane element of the RAN. In at least some example embodiments of the method 1800, the bearer context release command for the CWRC bearer is sent based on receipt of a bearer context release complete message from a user plane element of the RAN and based on receipt of a terminal device context release complete message for the terminal device of the CWRC bearer. In at least some example embodiments of the method 1800, the CWRC bearer includes one of (1) a bearer including multiple protocol data unit sessions based on multiple respective service data adaptation protocol entities mapped onto access-specific data radio bearers associated with respective packet data convergence protocol entities, (2) a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, or (3) a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access. It will be appreciated that various other example embodiments, including various capabilities described herein as being supported by the gNB-CU-CP, may be incorporated within the context of the method 1800 of FIG. 18.

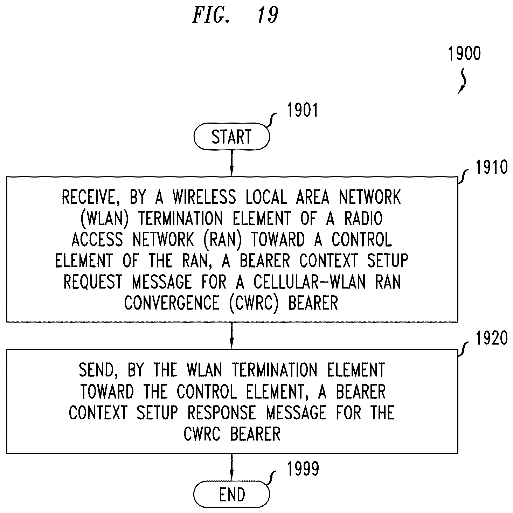

FIG. 19 depicts an example embodiment of a method for use by a WLAN termination element of a RAN to support cellular-WLAN RAN convergence in the RAN. It will be appreciated that, although primarily presented herein as being performed serially, at least a portion of the functions of method 1900 may be performed contemporaneously or in a different order than as presented in FIG. 19. At block 1901, the method 1900 begins. At block 1910, receive, by a wireless local area network (WLAN) termination element of a radio access network (RAN) toward a control element of the RAN, a bearer context setup request message for a cellular - WLAN RAN convergence (CWRC) bearer. At block 1920, send, by the WLAN termination element toward the control element, a bearer context setup response message for the CWRC bearer. At block 1999, the method 1900 ends. In at least some example embodiments of the method 1900, the bearer context setup request message for the CWRC bearer is received based on triggering of a bearer context setup procedure by the control element. In at least some example embodiments of the method 1900, the method 1900 includes receiving, by the WLAN termination element from the control element, a bearer context release command for the CWRC bearer, and sending, by the WLAN termination element toward the control element, a bearer context release complete message for the CWRC bearer. In at least some example embodiments of the method 1900, the bearer context release command for the CWRC bearer is received based on triggering of a bearer context release procedure by the control element. In at least some example embodiments of the method 1900, the bearer context release command for the CWRC bearer is received based on triggering of a bearer context release procedure by a user plane element of the RAN. In at least some example embodiments of the method 1900, the bearer context release command for the CWRC bearer is received based on receipt of a bearer context release complete message from a user plane element of the RAN and based on receipt of a terminal device context release complete message for the terminal device of the CWRC bearer. In at least some example embodiments of the method 1900, the CWRC bearer includes one of (1) a bearer including multiple protocol data unit sessions based on multiple respective service data adaptation protocol entities mapped onto access-specific data radio bearers associated with respective packet data convergence protocol entities, (2) a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, or (3) a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access. It will be appreciated that various other example embodiments, including various capabilities described herein as being supported by the NG-WT, may be incorporated within the context of the method 1900 of FIG. 19.

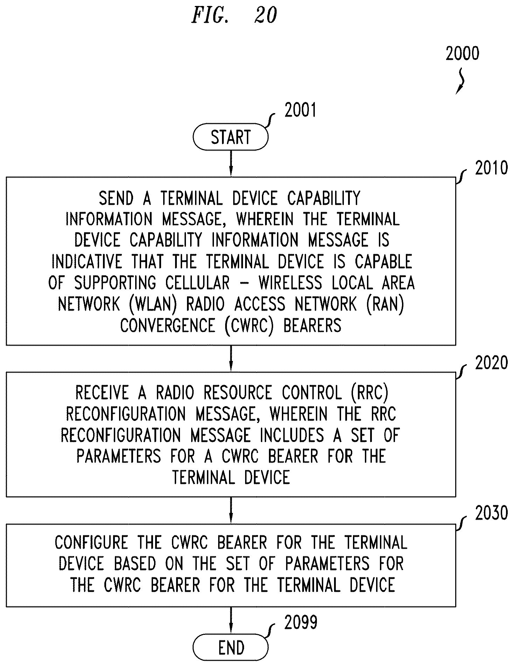

FIG. 20 depicts an example embodiment of a method for use by a terminal device to support cellular-WLAN RAN convergence in the RAN. It will be appreciated that, although primarily presented herein as being performed serially, at least a portion of the functions of method 2000 may be performed contemporaneously or in a different order than as presented in FIG. 20. At block 2001, the method 2000 begins. At block 2010, send a terminal device capability information message, wherein the terminal device capability information message is indicative that the terminal device is capable of supporting cellular - wireless local area network (WLAN) radio access network (RAN) convergence (CWRC) bearers. At block 2020, receive a radio resource control (RRC) reconfiguration message, wherein the RRC reconfiguration message includes a set of parameters for a CWRC bearer for the terminal device. At block 2030, configure the CWRC bearer for the terminal device based on the set of parameters for the CWRC bearer for the terminal device. At block 2099, the method 2000 ends. In at least some example embodiments of the method 2000,the terminal device capability information message includes a unique layer 2 identifier specific to the terminal device for use in supporting CWRC-related operations. In at least some example embodiments of the method 2000, the terminal device supports a downlink and an uplink, and the terminal device capability information message includes an information element including at least one of at least one parameter indicative as to whether the terminal device supports a first CWRC bearer type in at least one of the downlink or the uplink, at least one parameter indicative as to whether the terminal device supports a second CWRC bearer type in at least one of the downlink or the uplink, or at least one parameter indicative as to whether the terminal device supports a third CWRC bearer type in at least one of the downlink or the uplink. In at least some example embodiments of the method 2000, the RRC reconfiguration message includes a first information element, where the first information element includes a data radio bearer type element indicative of a data radio bearer type for the CWRC bearer for the terminal device, a CWRC bearer type element indicative of a bearer type of the CWRC bearer for the terminal device, a service data adaptation protocol (SDAP) configuration element including one or more parameters for an SDAP entity for the CWRC bearer for the terminal device, and a packet data convergence protocol (PDCP) configuration element including one or more parameters for a PDCP entity for the CWRC bearer for the terminal device. In at least some example embodiments of the method 2000, the RRC reconfiguration message includes a second information element, where the second information element includes a unique Layer 2 identifier specific to a WLAN termination element supporting the CWRC bearer for the terminal device. In at least some example embodiments of the method 2000, the CWRC bearer for the terminal device comprises one of (1) a bearer including multiple protocol data unit sessions based on multiple respective service data adaptation protocol entities mapped onto access-specific data radio bearers associated with respective packet data convergence protocol entities, (2) a bearer including a protocol data unit session based on a corresponding service data adaptation protocol entity mapped onto access-specific data radio bearers associated with respective packet data convergence protocol entities, wherein at least one of the access-specific data radio bearers is based on WLAN access, (3) a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access. In at least some example embodiments of the method 2000, the terminal device is configured to support (1) a first service data adaptation protocol entity mapped to a first data radio bearer associated with a first packet data convergence protocol entity based on cellular access and a second service data adaptation protocol entity mapped to a second data radio bearer associated with a second packet data convergence protocol entity based on WLAN access, (2) a service data adaptation protocol entity mapped to a first data radio bearer associated with a first packet data convergence protocol entity based on cellular access and a second data radio bearer associated with a second packet data convergence protocol entity based on WLAN access, or (3) a service data adaptation protocol entity mapped to a packet data convergence protocol entity supporting a data radio bearer supporting a first logical channel based on cellular access and a second logical channel based on WLAN access. It will be appreciated that various other example embodiments, including various capabilities described herein as being supported by the UE or terminal device, may be incorporated within the context of the method 2000 of FIG. 20.

Various example embodiments of the CWRC capability may be configured to provide various advantages or potential advantages.

For example, various example embodiments of the CWRC capability may be configured to support convergence of cellular and WLAN access in a manner tending to obviate operation of these access mechanisms in a disparate manner that prevented joint programmability and use-case-based customization, thereby enabling support for joint programmability and use-case-based customization. For example, various example embodiments of the CWRC capability may be configured to support convergence of cellular and WLAN access based on support for extending the 3GPP system architecture to incorporate WLAN access within a 3GPP access network, support for extending the 3GPP control plane to support various WLAN operations as well as performance measurement reporting, support for extending the 3GPP user plane to incorporate a variety of convergence mechanisms for cellular and WLAN traffic, support for providing the relevant control and user plane interfaces and procedures in support of addressing the above capabilities, or the like as well as various combinations thereof.

For example, various example embodiments of the CWRC capability may be configured to support convergence of cellular and WLAN access at Layer 2, thereby obviating the need to rely on LWA and LWIP capabilities (although it will be appreciated that at least some such mechanisms may still be used). It is noted that such LWA and LWIP specifications are generally geared towards monolithic eNBs and have not been updated for the NG-RAN architecture. Consequently, as discussed above, LWA and LWIP are substantially inadequate for modern enterprise networks, necessitating a robust multi-access connectivity solution that leverages LTE, NR, and WLAN. Various example embodiments of the CWRC capability may be configured to support convergence of cellular and WLAN access at Layer 2 in a manner tending to overcome at least some such limitations.

For example, various example embodiments of the CWRC capability may be configured to support convergence of cellular and WLAN access at Layer 2, thereby obviating the need to rely on Layer 4 convergence mechanisms such as MPTCP and MQUIC-based ATSSS (although it will be appreciated that at least some such mechanisms may still be used). The principle for Layer 4 convergence, as espoused by ATSSS, is centered around the merging of data streams at network endpoints, i.e., at the UE and at the UPF. However, there may be certain shortcomings to this approach. First the endpoints of the network are oblivious to the resource management priorities at the RAN and, hence, cannot make informed decisions on the traffic flow splitting and switching between the two RATs. Second, the network endpoint traffic managers are simply too slow to react to the channel disruptions that happen at the RAN. Previous research shows that average RTT from a UE to edge/cloud server on commercial networks can be more than 150ms-200ms. With modern AR/VR applications demanding latencies of under 50ms, it may be difficult for application servers to re-balance traffic flows during RAN disruptions. Various example embodiments of the CWRC capability may be configured to support convergence of cellular and WLAN access at Layer 2 in a manner tending to overcome at least some such limitations.

It will be appreciated that various example embodiments of the CWRC capability may be configured to provide various other advantages or potential advantages.

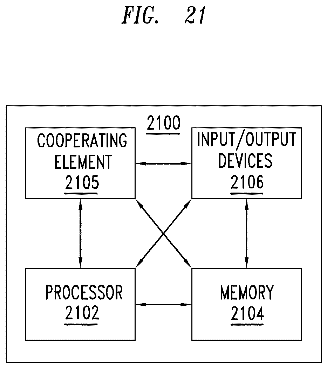

FIG. 21 depicts an example embodiment of a computer suitable for use in performing various functions presented herein.

The computer 2100 includes a processor 2102 (e.g., a central processing unit (CPU), a graphics processing unit (GPU), a network processing unit (NPU), a processor, a processor core of a processor, a subset of processor cores of a processor, a set of processor cores of a processor, or the like) and a memory 2104 (e.g., a random access memory (RAM), a read-only memory (ROM), or the like). In at least some example embodiments, the computer 2100 may include at least one processor and at least one memory storing instructions that, when executed by the at least one processor, cause the computer 2100 to perform various functions presented herein.

The computer 2100 also may include a cooperating element 2105. The cooperating element 2105 may be a hardware device. The cooperating element 2105 may include firmware. The cooperating element 2105 may be a process that can be loaded into the memory 2104 and executed by the processor 2102 to implement various functions presented herein (in which case, for example, the cooperating element 2105 (including associated data structures) can be stored on a non-transitory computer readable medium, such as a storage device or other suitable type of storage element (e.g., a magnetic drive, an optical drive, or the like)).

The computer 2100 also may include one or more input/output devices 2106. The input/output devices 2106 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 2100 may represent a general architecture and functionality suitable for implementing functional elements described herein, portions of functional elements described herein, or the like, as well as various combinations thereof. For example, computer 2100 may provide a general architecture and functionality that is suitable for implementing one or more elements presented herein or may provide a general architecture and functionality within which one or more elements presented herein may be utilized.

It will be appreciated that various functions presented herein may be implemented within hardware, a combination of hardware and software, or the like. For example, at least some of the functions presented herein may be implemented in hardware (e.g., using a general purpose computer, one or more application specific integrated circuits, and/or any other hardware equivalents). For example, at least some of the functions presented herein may be implemented in a combination of hardware and software (e.g., via implementation of software on one or more processors, for executing on a general purpose computer (e.g., via execution by one or more processors) so as to provide a special purpose computer, and the like).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored within non-transitory computer-readable media, such as within memory within a computing device operating according to the instructions, within fixed or removable media, or the like. It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other network device or computing device.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. A terminal device, comprising:
means for sending a terminal device capability information message, wherein the terminal device capability information message is indicative that a terminal device is capable of supporting cellular - wireless local area network (WLAN) radio access network (RAN) convergence (CWRC) bearers;
means for receiving a radio resource control (RRC) reconfiguration message, wherein the RRC reconfiguration message includes a set of parameters for a CWRC bearer for the terminal device; and
means for configuring the CWRC bearer for the terminal device based on the set of parameters for the CWRC bearer for the terminal device.

2. The terminal device according to claim 1, wherein the terminal device capability information message includes a unique layer 2 identifier specific to the terminal device for use in supporting CWRC-related operations.

3. The terminal device according to any of claims 1 to 2, wherein the terminal device supports a downlink and an uplink, wherein the terminal device capability information message includes an information element including at least one of:
at least one parameter indicative as to whether the terminal device supports a first CWRC bearer type in at least one of the downlink or the uplink;
at least one parameter indicative as to whether the terminal device supports a second CWRC bearer type in at least one of the downlink or the uplink; or
at least one parameter indicative as to whether the terminal device supports a third CWRC bearer type in at least one of the downlink or the uplink.

4. The terminal device according to any of claims 1 to 3, wherein the RRC reconfiguration message includes a first information element, wherein the first information element includes:
a data radio bearer type element indicative of a data radio bearer type for the CWRC bearer for the terminal device;
a CWRC bearer type element indicative of a bearer type of the CWRC bearer for the terminal device;
a service data adaptation protocol (SDAP) configuration element including one or more parameters for an SDAP entity for the CWRC bearer for the terminal device; and
a packet data convergence protocol (PDCP) configuration element including one or more parameters for a PDCP entity for the CWRC bearer for the terminal device.

5. The terminal device according to claim 4, wherein the RRC reconfiguration message includes a second information element, wherein the second information element includes a unique Layer 2 identifier specific to a WLAN termination element supporting the CWRC bearer for the terminal device.

6. The terminal device according to any of claims 1 to 5, wherein the CWRC bearer for the terminal device includes one of:
a bearer including multiple protocol data unit sessions based on multiple respective service data adaptation protocol entities mapped onto access-specific data radio bearers associated with respective packet data convergence protocol entities;
a bearer including a protocol data unit session based on a corresponding service data adaptation protocol entity mapped onto access-specific data radio bearers associated with respective packet data convergence protocol entities, wherein at least one of the access-specific data radio bearers is based on WLAN access; or
a bearer including a protocol data unit session based on a corresponding service data adaptation protocol entity mapped onto access-specific logical channels of a data radio bearer associated with a respective packet data convergence protocol entity, wherein at least one of the access-specific logical channels is based on WLAN access.

7. The terminal device according to any of claims 1 to 6, wherein the terminal device is configured to support at least one of:
a first service data adaptation protocol entity mapped to a first data radio bearer associated with a first packet data convergence protocol entity based on cellular access and a second service data adaptation protocol entity mapped to a second data radio bearer associated with a second packet data convergence protocol entity based on WLAN access;
a service data adaptation protocol entity mapped to a first data radio bearer associated with a first packet data convergence protocol entity based on cellular access and a second data radio bearer associated with a second packet data convergence protocol entity based on WLAN access; or
a service data adaptation protocol entity mapped to a packet data convergence protocol entity supporting a data radio bearer supporting a first logical channel based on cellular access and a second logical channel based on WLAN access.

8. An apparatus, comprising:
means for sending, by a control element of a radio access network (RAN) toward a wireless local area network (WLAN) termination element of the RAN, a bearer context setup request message for a cellular - WLAN RAN convergence (CWRC) bearer; and
means for receiving, by the control element from the WLAN termination element, a bearer context setup response message for the CWRC bearer.

9. The apparatus according to claim 8, wherein the bearer context setup request message for the CWRC bearer is sent based on triggering of a bearer context setup procedure by the control element.

10. The apparatus according to any of claims 8 to 9, further comprising:
means for sending, by the control element toward a user plane element of the RAN, a bearer context setup request message.

11. The apparatus according to any of claims 8 to 10, further comprising:
means for sending, by the control element toward a user plane element of the RAN, a bearer context modification request message.

12. The apparatus according to any of claims 8 to 11, further comprising:
means for sending, by the control element toward the WLAN termination element, a bearer context release command for the CWRC bearer; and
means for receiving, by the control element from the WLAN termination element, a bearer context release complete message for the CWRC bearer.

13. The apparatus according to claim 12, wherein the bearer context release command for the CWRC bearer is sent based on triggering of a bearer context release procedure by the control element, and the apparatus further comprises:
means for sending, by the control element toward a user plane element of the RAN prior to sending of the bearer context release command for the CWRC bearer, a bearer context release command message; and
means for sending, by the control element toward a distributed unit of the RAN prior to sending of the bearer context release command for the CWRC bearer, a terminal device context release command for a terminal device of the CWRC bearer.

14. The apparatus according to claim 12, wherein the bearer context release command for the CWRC bearer is sent based on triggering of a bearer context release procedure by a user plane element of the RAN, wherein the bearer context release command for the CWRC bearer is sent based on receipt of a bearer context release complete message from a user plane element of the RAN and based on receipt of a terminal device context release complete message for the terminal device of the CWRC bearer.

15. An apparatus, comprising:
means for receiving, by a wireless local area network (WLAN) termination element of a radio access network (RAN) toward a control element of the RAN, a bearer context setup request message for a cellular - WLAN RAN convergence (CWRC) bearer; and
means for sending, by the WLAN termination element toward the control element, a bearer context setup response message for the CWRC bearer.
